# EUROPEAN PATENT APPLICATION

(11) **EP 4 672 687 A1**
(43) Date of publication of application: **31.12.2025**
(21) Application number: 24796023.0
(22) Date of filing: 22.04.2024
(51) Int. Cl.: H04L 27/26

(54) **INFORMATION TRANSMISSION METHOD AND APPARATUS**

(30) Priority: 27.04.2023 CN 202310481743
(71) Applicant: Huawei Technologies Co., Ltd., Shenzhen, Guangdong 518129 (CN)
(72) Inventor: HU, Mengshi, Shenzhen, Guangdong 518129 (CN); GAN, Ming, Shenzhen, Guangdong 518129 (CN); LIU, Chenchen, Shenzhen, Guangdong 518129 (CN); MAO, Zhi, Shenzhen, Guangdong 518129 (CN); YU, Jian, Shenzhen, Guangdong 518129 (CN)
(74) Representative: Pfenning, Meinig & Partner mbB
(86) International application number: PCT/CN2024/089169
(87) International publication number: WO 2024/222642

(57) **Abstract**

This application provides an information transmission method, and an apparatus, to reduce a PAPR. In the method, a first apparatus sends a PPDU to a second apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data sent on the first subcarrier set and a sequence sent on the second subcarrier set, and the sequence is used to reduce the PAPR. Based on the foregoing solution, the PAPR may be flexibly reduced by changing a value of each second subcarrier included in the second subcarrier set.

## Description

### CROSS-REFERENCE TO RELATED APPLICATIONS

This application claims priority to Chinese Patent Application No. 202310481743.4, filed with the China National Intellectual Property Administration on April 27, 2023 and entitled "INFORMATION TRANSMISSION METHOD, AND APPARATUS", which is incorporated herein by reference in its entirety.

### TECHNICAL FIELD

This application relates to the field of wireless communication technologies, and in particular, to an information transmission method, and an apparatus.

### BACKGROUND

In both a low frequency scenario and a high frequency scenario, a peak to average power ratio (peak to average power ratio, PAPR) is an important factor that affects system performance. In an orthogonal frequency division multiplexing (orthogonal frequency division multiplexing, OFDM) system, a time-domain transmit signal may be understood as a sum of all subcarriers obtained through inverse fast Fourier transform (inverse fast Fourier transform, IFFT). In this case, in comparison with a single-carrier system, in the OFDM system, there is a probability that a transmit signal has a high peak value, and therefore there is a probability that there is a high PAPR. The high PAPR not only reduces efficiency of a power amplifier of a transmitter, but also affects a signal-to-quantization-noise ratio (signal-to-quantization-noise ratio, SQNR) of a digital-to-analog converter and a signal-to-quantization-noise ratio of an analog-to-digital converter. Therefore, reducing the PAPR needs to be focused on in an OFDM system design. In addition, in a high frequency, because the power amplifier exhibits a greater degree of non-linearity as an operating frequency increases, it is more important to reduce the PAPR.

### SUMMARY

This application provides an information transmission method, and an apparatus, to reduce a PAPR.

According to a first aspect, an information transmission method is provided. The method may be performed by a first apparatus. The first apparatus may be a network device or a chip/a chip system. In the method, the first apparatus sends a physical protocol data unit (physical protocol data unit, PPDU) to a second apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data sent on the first subcarrier set and a sequence sent on the second subcarrier set, and the sequence is used to reduce a PAPR.

Based on the foregoing solution, the first data may be carried in the first subcarrier set, the sequence may be carried in the second subcarrier set, and the PAPR may be flexibly reduced by changing a value of each second subcarrier included in the second subcarrier set. In addition, a value of the first subcarrier set does not change, and transmission performance of the first data is not affected.

In a possible implementation, the resource unit allocation information includes one or more user fields. The one or more user fields include a user field indicating the second subcarrier set, and an identifier of the user field indicating the second subcarrier set is a special value. Alternatively, the resource unit allocation information indicates that a part or all of the one or more resource units include only the second subcarrier set.

Based on the foregoing solution, in comparison with a solution in which the first apparatus determines the second subcarrier set and changes the value of the second subcarrier set, in the solution, the first apparatus may indicate the second subcarrier set to the second apparatus, so that the second apparatus can also learn of the second subcarrier set whose subcarrier value is changed, and complexity of parsing data by the second apparatus can be reduced.

In a possible implementation, the resource unit allocation information may be carried in a punctured channel information field (punctured channel information field).

Based on the foregoing solution, when the one or more available resource units are indicated through the punctured channel information field, that the one or more resource units include the first subcarrier set and the second subcarrier set may be notified, so that the solution is applicable to a non-orthogonal frequency division multiplexing access (orthogonal frequency division multiplexing access, OFDMA) mode.

In a possible implementation, the second subcarrier set includes one or more of a null subcarrier, a guard subcarrier, and a pilot subcarrier. Based on the foregoing solution, the second subcarrier set is implemented through the null subcarrier, the guard subcarrier, and the pilot subcarrier, so that a quantity of first subcarriers occupied as the second subcarrier can be reduced, and more first subcarriers are used to transmit data, thereby saving transmission resources.

In a possible implementation, the PPDU includes a plurality of OFDM symbols, and selection of a value of a guard interval between the plurality of OFDM symbols is related to the second subcarrier set. Based on the foregoing solution, the second subcarrier set may be used to reduce the PAPR, but some additional processing time is required to obtain an appropriate subcarrier value. In the foregoing solution, an appropriate subcarrier value may be generated through additional time provided by the guard interval between the plurality of OFDM symbols.

In a possible implementation, the guard interval includes one or more of a cyclic prefix, a cyclic suffix, and a fixed sequence. Based on this solution, the guard interval may be implemented through one or more of the cyclic prefix, the cyclic suffix, and the fixed sequence, so that additional time can be provided to generate an appropriate subcarrier value.

In a possible implementation, at least one field before a data field included in the PPDU may include a preset padding bit. Based on this solution, additional time is provided through the preset padding bit to generate an appropriate subcarrier value.

According to a second aspect, an information transmission method is provided. The method may be performed by a first apparatus. The first apparatus may be a network device or a chip/a chip system. In the method, the first apparatus sends a PPDU to a second apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR.

Based on this solution, the part or all of data subcarriers may be multiplied by the coefficient to reduce the PAPR, and the part or all of data subcarriers may still carry data. Therefore, in comparison with reducing the PAPR through the second subcarrier set, in the solution, transmission resources can be saved.

In a possible implementation, the reference subcarrier includes one or more of a pilot subcarrier, a data subcarrier, a null subcarrier, and a guard subcarrier.

According to a third aspect, an information transmission method is provided. The method may be performed by a second apparatus. The second apparatus may be a terminal device or a chip/chip system. In the method, the second apparatus receives a PPDU from a first apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data on the first subcarrier set and a sequence on the second subcarrier set, and the sequence is used to reduce a PAPR.

In a possible implementation, the resource unit allocation information includes one or more user fields. A user field whose identifier is a special value in the one or more user fields indicates the second subcarrier set. Alternatively, the resource unit allocation information indicates that a part or all of the one or more resource units include only the second subcarrier set.

In a possible implementation, the resource unit allocation information is carried in a punctured channel information field.

In a possible implementation, the second subcarrier set includes one or more of a null subcarrier, a guard subcarrier, and a pilot subcarrier.

In a possible implementation, the PPDU includes a plurality of OFDM symbols, and selection of a value of a guard interval between the plurality of OFDM symbols is related to the second subcarrier set.

In a possible implementation, the guard interval includes one or more of a cyclic prefix, a cyclic suffix, and a fixed sequence.

In a possible implementation, at least one field before a data field included in the PPDU includes a preset padding bit.

According to a fourth aspect, an information transmission method is provided. The method may be performed by a second apparatus. The second apparatus may be a terminal device or a chip/chip system. In the method, the second apparatus receives a PPDU from a first apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR. The second apparatus divides the part or all of data subcarriers by the coefficient, to obtain an original value of the part or all of data subcarriers.

In a possible implementation, the reference subcarrier includes one or more of a pilot subcarrier, a data subcarrier, a null subcarrier, and a guard subcarrier.

According to a fifth aspect, a communication apparatus is provided, including a processing unit and a transceiver unit.

The processing unit is configured to generate a PPDU. The transceiver unit is configured to send the PPDU to a second apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data sent on the first subcarrier set and a sequence sent on the second subcarrier set, and the sequence is used to reduce a PAPR.

In a possible implementation, the resource unit allocation information includes one or more user fields. The one or more user fields include a user field indicating the second subcarrier set, and an identifier of the user field indicating the second subcarrier set is a special value. Alternatively, the resource unit allocation information indicates that a part or all of the one or more resource units include only the second subcarrier set.

In a possible implementation, the resource unit allocation information is carried in a punctured channel information field (punctured channel information field).

In a possible implementation, the second subcarrier set includes one or more of a null subcarrier, a guard subcarrier, and a pilot subcarrier.

In a possible implementation, the PPDU includes a plurality of OFDM symbols, and selection of a value of a guard interval between the plurality of OFDM symbols is related to the second subcarrier set.

In a possible implementation, the guard interval includes one or more of a cyclic prefix, a cyclic suffix, and a fixed sequence.

In a possible implementation, at least one field before a data field included in the PPDU includes a preset padding bit.

According to a sixth aspect, a communication apparatus is provided, including a processing unit and a transceiver unit.

The processing unit is configured to generate a PPDU. The transceiver unit is configured to send the PPDU to a second apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR.

In a possible implementation, the reference subcarrier includes one or more of a pilot subcarrier, a data subcarrier, a null subcarrier, and a guard subcarrier.

According to a seventh aspect, a communication apparatus is provided, including a processing unit and a transceiver unit.

The transceiver unit is configured to receive a PPDU from a first apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The processing unit is configured to determine the first subcarrier set and the second subcarrier set based on the resource unit allocation information. The PPDU includes first data on the first subcarrier set and a sequence on the second subcarrier set, and the sequence is used to reduce a PAPR.

In a possible implementation, the resource unit allocation information includes one or more user fields. A user field whose identifier is a special value in the one or more user fields indicates the second subcarrier set. Alternatively, the resource unit allocation information indicates that a part or all of the one or more resource units include only the second subcarrier set.

In a possible implementation, the resource unit allocation information is carried in a punctured channel information field.

In a possible implementation, the second subcarrier set includes one or more of a null subcarrier, a guard subcarrier, and a pilot subcarrier.

In a possible implementation, the PPDU includes a plurality of OFDM symbols, and selection of a value of a guard interval between the plurality of OFDM symbols is related to the second subcarrier set.

In a possible implementation, the guard interval includes one or more of a cyclic prefix, a cyclic suffix, and a fixed sequence.

In a possible implementation, at least one field before a data field included in the PPDU includes a preset padding bit.

According to an eighth aspect, a communication apparatus is provided, including a processing unit and a transceiver unit.

The transceiver unit is configured to receive a PPDU from a first apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR. The processing unit is configured to divide the part or all of data subcarriers by the coefficient, to obtain an original value of the part or all of data subcarriers.

In a possible implementation, the reference subcarrier includes one or more of a pilot subcarrier, a data subcarrier, a null subcarrier, and a guard subcarrier.

According to a ninth aspect, a communication apparatus is provided. The communication apparatus may be the communication apparatus according to any one of the possible implementations of the third aspect or the fourth aspect in the foregoing embodiments, or a chip disposed in the communication apparatus according to any one of the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device according to any one of the possible implementations of the first aspect, or the communication apparatus is enabled to perform the method performed by the network device according to any one of the possible implementations of the second aspect.

It should be understood that the communication interface may be implemented by using an antenna, a feeder, a codec, and the like in the communication apparatus. Alternatively, if the communication apparatus is a chip disposed in a terminal device or a network device, the communication interface may be an input/output interface of the chip, for example, an input/output pin. The communication apparatus may further include a transceiver, used by the communication apparatus to communicate with another device.

According to a tenth aspect, an embodiment of this application provides a chip system. The chip system includes a processor, and may further include a memory, configured to implement the method performed by the terminal device or the network device according to any one of the possible implementations of the first aspect to the fourth aspect. In a possible implementation, the chip system further includes a memory, configured to store program instructions and/or data. The chip system may include a chip, or may include a chip and another discrete device.

According to an eleventh aspect, this application provides a computer-readable storage medium. The computer-readable storage medium stores a computer program or instructions. When the computer program or the instructions are run, the methods performed by the terminal device or the network device in the foregoing aspects are implemented.

According to a twelfth aspect, a computer program product is provided. The computer program product includes computer program code or instructions. When the computer program code or the instructions are run, the methods performed by the terminal device or the network device in the foregoing aspects are performed.

According to a thirteenth aspect, a communication apparatus is provided. The communication apparatus includes units or modules configured to perform the methods in the foregoing aspects.

According to a fourteenth aspect, a chip system is provided, and includes a logic circuit and an input/output interface. The logic circuit is configured to perform the method performed by the terminal device or the network device. The input/output interface is configured to communicate with another apparatus.

According to a fifteenth aspect, a system is provided, including at least one network device and at least one terminal device.

For beneficial effect of the third aspect to the fifteenth aspect and the implementations thereof, refer to descriptions of the beneficial effect of the method in the first aspect and the second aspect and the implementations thereof.

### BRIEF DESCRIPTION OF DRAWINGS

FIG. 1 shows a communication system according to an embodiment of this application;
FIG. 2A is a diagram of a data subcarrier according to an embodiment of this application;
FIG. 2B is a diagram of a free subcarrier according to an embodiment of this application;
FIG. 3 is a diagram of an HE-SIG-B field;
FIG. 4A is a diagram of a resource unit in a range of 20 MHz according to an embodiment of this application;
FIG. 4B is a diagram of a resource unit in a range of 40 MHz according to an embodiment of this application;
FIG. 4C is a diagram of a resource unit in a range of 80 MHz according to an embodiment of this application;
FIG. 5 is an example flowchart of an information transmission method according to an embodiment of this application;
FIG. 6 is a diagram of a resource unit according to an embodiment of this application;
FIG. 7A is a diagram of another free subcarrier according to an embodiment of this application;
FIG. 7B is a diagram of another free subcarrier according to an embodiment of this application;
FIG. 8A is a diagram of another free subcarrier according to an embodiment of this application;
FIG. 8B is a diagram of another free subcarrier according to an embodiment of this application;
FIG. 9 is an example flowchart of another information transmission method according to an embodiment of this application;
FIG. 10 is a diagram of a reference subcarrier according to an embodiment of this application;
FIG. 11 is a diagram of a communication apparatus according to an embodiment of this application;
FIG. 12 is a diagram of another communication apparatus according to an embodiment of this application;
FIG. 13 is a diagram of another communication apparatus according to an embodiment of this application; and
FIG. 14 is a diagram of another communication apparatus according to an embodiment of this application.

### DESCRIPTION OF EMBODIMENTS

For ease of description of technical solutions provided in embodiments of this application, the following describes technical terms in embodiments of this application.
1. Free subcarrier: The free subcarrier is a part of subcarriers whose subcarrier values can be changed to reduce a PAPR. Optionally, no data may be transmitted on the free subcarrier. Optionally, a sequence may be transmitted on a free subcarrier, and the sequence may have no meaning.
2. Data subcarrier: The data subcarrier is a subcarrier used to transmit data.

Embodiments of this application are applicable to a WLAN scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.11ax, a next generation of 802.11ax, for example, an 802.11be standard, Wi-Fi 7, or extremely high throughput (extremely high throughput, EHT), 802.11ad, 802.11ay, 802.11bf, a next generation of 802.11be, for example, Wi-Fi 8, or a next-generation standard of Wi-Fi 8. Alternatively, embodiments of this application are applicable to a wireless local area network system like an internet of things (internet of things, IoT) network or a vehicle-to-everything (Vehicle to X, V2X) network. Certainly, embodiments of this application are further applicable to another possible communication system, for example, an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN starts from an 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

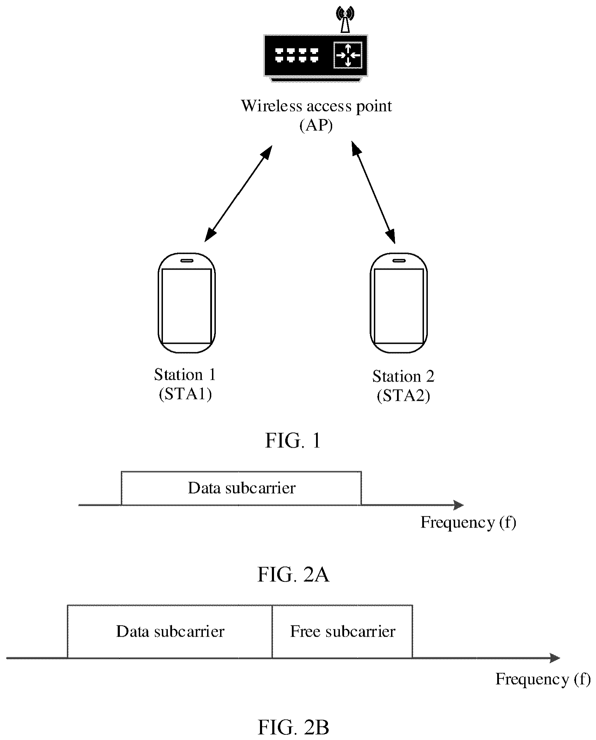

FIG. 1 is a diagram of a network architecture of a WLAN to which an embodiment of this application is applicable. In FIG. 1, an example in which the WLAN includes one wireless access point (access point, AP) and two stations (stations, STA) is used. A STA associated with the AP can receive a radio frame sent by the AP, and can also send a radio frame to the AP. In addition, embodiments of this application are also applicable to communication between APs. For example, the APs may communicate with each other through a distributed system (distributed system, DS). Embodiments of this application are also applicable to communication between STAs. It should be understood that quantities of APs and STAs in FIG. 1 are merely an example. There may be more or less APs and STAs.

The access point may be an access point through which a terminal device (for example, a mobile phone) accesses a wired (or wireless) network, and is mainly deployed at home, in a building, and in a campus, with a typical coverage radius ranging from tens of meters to hundreds of meters. Certainly, the access point may alternatively be deployed outdoors. The access point is equivalent to a bridge that connects a wired network and a wireless network, and is mainly used to connect various wireless network clients together and then connect the wireless network to an ethernet. Specifically, the access point may be a terminal device (for example, a mobile phone) or a network device (for example, a router) with a Wi-Fi chip, or may be a wireless C chip, a wireless sensor, a wireless communication terminal, or the like that has an access point function. The access point may be a device that supports the 802.11be standard. Alternatively, the access point may be a device that supports a plurality of wireless local area network (wireless local area network, WLAN) standards of the 802.11 family such as 802.11ax, 802.11ac, 802.11ad, 802.11ay, 802.11n, 802.11g, 802.11b, 802.11a, and a next generation of 802.11be.

The station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and a next generation of 802.11be.

For example, the access point and the station may be devices used in an internet of vehicles, internet of things nodes or sensors in an internet of things (IoT, internet of things), smart cameras, smart remote controls, or smart water or electricity meters in a smart home, or sensors in a smart city.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as APs. The STA is usually a terminal product that supports media access control (media access control, MAC) and a physical layer (physical, PHY) in 802.11 system standards, for example, a mobile phone or a notebook computer.

In both a low frequency scenario and a high frequency scenario, a peak to average power ratio (peak to average power ratio, PAPR) is an important factor that affects system performance. In an OFDM system, a time domain transmit signal may be understood as a sum of all subcarriers obtained through inverse fast Fourier transform (inverse fast Fourier transform, IFFT). In this case, in comparison with a single-carrier system, in the OFDM system, there is a probability that a transmit signal has a high peak value, and therefore there is a probability that there is a high PAPR. The high PAPR not only reduces efficiency of a power amplifier of a transmitter, but also affects a signal-to-quantization-noise ratio (signal-to-quantization-noise ratio, SQNR) of a digital-to-analog converter and a signal-to-quantization-noise ratio of an analog-to-digital converter. Therefore, reducing the PAPR needs to be focused on in an OFDM system design. In addition, in a high frequency, because the power amplifier exhibits a greater degree of non-linearity as an operating frequency increases, it is more important to reduce the PAPR.

Currently, there are some methods for reducing the PAPR when a quantity of IFFT points remains unchanged. In a possible case, the PAPR may be adjusted through phase rotation (phase rotation). For example, it is assumed that there is a frequency domain sequence a={a1, a2, a3, a4, a5, ..., a256}. In this method, the foregoing sequence may be divided into at least two parts, and phase rotation is performed on subcarriers of each part. Because phase rotation of all parts is inconsistent, an objective of adjusting and outputting the PARP can be achieved. However, the foregoing method is designed based on a specific sequence. For example, a frequency domain sequence is repeated to some extent, or a frequency domain sequence is known. For a completely random sequence, a preset phase rotation adjustment parameter cannot achieve an objective of reducing the PAPR.

In this embodiment of this application, the PAPR may be reduced in a manner of carrying a free subcarrier. For example, a value of a free subcarrier that does not carry data may be changed to reduce the PAPR. For example, originally, 256 subcarriers are to be output as a time domain waveform through IFFT, and each subcarrier of the 256 points corresponds to one constellation point in a modulation scheme. The 256 constellation points may be represented as a frequency domain sequence a={a1, a2, a3, a4, a5, ..., a256}, and a corresponding point of the output time domain waveform may be represented as a time domain sequence b={b1, b2, b3, b4, b5, ..., b256}. When the PAPR value is high, the PAPR may be adjusted by changing values of a part of subcarriers in the frequency domain sequence a. This part of subcarriers is referred to as free subcarriers.

Specifically, the original frequency domain sequence a corresponds to 256 subcarriers, and may carry data represented by 256 constellation points, as shown in FIG. 2A. Currently, a part of subcarriers, for example, 20 subcarriers, may be spared to carry no data, and are specially used for PAPR adjustment. The 20 subcarriers may be referred to as free subcarriers, as shown in FIG. 2B. In this case, a sequence a that carries free subcarriers may be {a1, a2, a3, a4, ..., a236, c1, c2, c3, c4, ..., c20}, where c1 to c20 are free subcarriers. The free subcarriers correspond to different subcarrier values, so that a PAPR of the time domain sequence b obtained through IFFT can be reduced.

It should be noted that, in the foregoing example, the free subcarrier is located at the end of the sequence a, but a position of the free subcarrier is not limited, and the free subcarrier may alternatively be located at another position of the sequence a. For a value of the free subcarrier, a PAPR may be reduced according to a simple random search method. For example, when a group of free subcarriers is not good, the value of the free subcarrier may be changed to recalculate whether the PAPR meets a standard, and a sequence a corresponding to a minimum PAPR value obtained after a plurality of attempts is used for sending. Alternatively, a proper value of the free subcarrier may be obtained based on a fixed part in the sequence a that carries the free subcarrier.

However, a transmitter determines the position of the free subcarrier and the value of the free subcarrier. Although the PAPR can be reduced, for a receiver, the position of the free subcarrier cannot be determined, which increases difficulty of parsing data by the receiver. Therefore, in this embodiment of this application, the transmitter may indicate the position of the free subcarrier to the receiver.

To facilitate description of the technical solutions provided in embodiments of this application, the following describes several resource unit allocation manners.

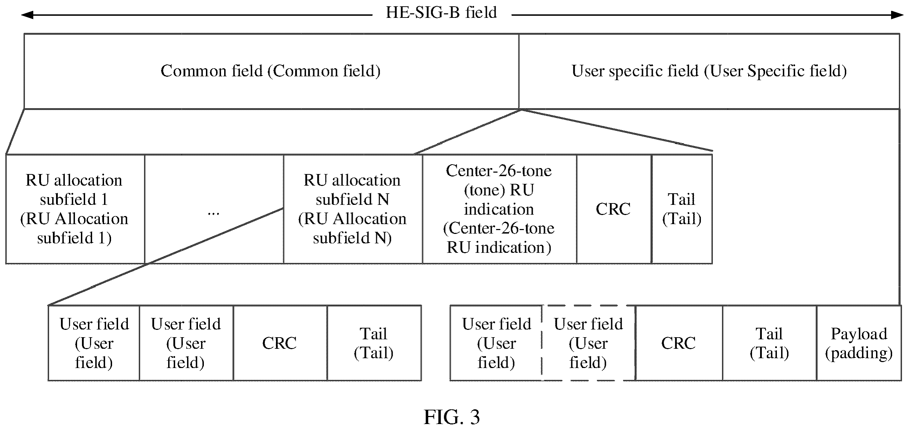

Currently, a method for notifying user RU allocation is described in 802.11ax, and specifically relates to a resource unit allocation subfield (RU allocation subfield) in a common field (common field) in a high efficiency signal field B (high efficiency signal field B, HE-SIG-B) in a multi-user (multi-user, MU) PPDU, and the resource unit allocation subfield may also be referred to as an RU allocation subfield. For clarity of description, a structure of the HE-SIG-B is described with reference to FIG. 3.

The HE-SIG-B is divided into two parts: a common field and a user specific field (user specific field). The common field includes 1 to N resource unit allocation subfields (RU allocation subfield), and a center 26-tone (center 26-tone) resource unit indication field that exists when a bandwidth is greater than or equal to 80 MHz. The common field further includes a cyclic redundancy code (cyclic redundancy code, CRC) used for check and a tail (tail) subfield used for cyclic decoding.

In the user specific field, there are 1 to M user fields (user field) in a resource unit allocation sequence, and the M user fields are usually grouped in pairs. One CRC field and one tail field are carried after every two user fields; but the last group of user fields may include 1 user field or 2 user fields, and the CRC field and the tail field are not carried.

A concept of a content channel (content channel, CC) is introduced into 802.11ax. When a data packet bandwidth is only 20 MHz, the HE-SIG-B includes only one content channel, the content channel includes one resource unit allocation subfield, and the resource unit allocation subfield indicates a resource unit in a range of 242-tone (tone) RU in a data part. The resource unit allocation subfield includes 8 bits, and all possible resource unit arrangement and combination manners within the 242-tone RU are indicated through an index. In addition, for an RU greater than or equal to 106-tone, a quantity of users performing multiple-input multiple-output (multiple-input multiple-output, MIMO) transmission in the RU is indicated through an index. An index table of the resource unit allocation subfield is shown in the table 1:

**Table 1: Resource unit allocation subfield in 11ax**

| Resource unit allocation subfield (B7, B6, B5, B4, B3, B2, B1, B0) | #1 | #2 | #3 | #4 | #5 | #6 | #7 | #8 | #9 | Quantity |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| 00010y₂y₁y₀ | 52 | | 52 | | - | 106 | | | | 8 |
| 00011y₂y₁y₀ | 106 | | | | - | 52 | | 52 | | 8 |
| 00100y₂y₁y₀ | 26 | 26 | 26 | 26 | 26 | 106 | | | | 8 |
| 00101y₂y₁y₀ | 26 | 26 | 52 | | 26 | 106 | | | | 8 |
| 00110y₂y₁y₀ | 52 | | 26 | 26 | 26 | 106 | | | | 8 |
| 00111y₂y₁y₀ | 52 | | 52 | | 26 | 106 | | | | 8 |
| 01000y₂y₁y₀ | 106 | | | | 26 | 26 | 26 | 26 | 26 | 8 |
| 01001y₂y₁y₀ | 106 | | | | 26 | 26 | 26 | 52 | | 8 |
| 01010y₂y₁y₀ | 106 | | | | 26 | 52 | | 26 | 26 | 8 |
| 01011y₂y₁y₀ | 106 | | | | 26 | 52 | | 52 | | 8 |
| 0110y₁y₀z₁z₀ | 106 | | | | - | 106 | | | | 16 |
| 01110000 | 52 | | 52 | | - | 52 | | 52 | | 1 |
| 01110001 | 242-tone RU empty (with zero users) | | | | | | | | | 1 |
| 01110010 | 484-tone RU; contributes 0 user fields to a user specific field of an HE-SIG-B content channel corresponding to the RU allocation subfield | | | | | | | | | 1 |
| | (484-tone RU; contributes 0 user fields to the user specific field in the same HE-SIG-B content channel as this RU allocation subfield) | | | | | | | | | |
| 01110011 | 996-tone RU; contributes 0 user fields to a user specific field of an HE-SIG-B content channel corresponding to the RU allocation subfield | | | | | | | | | 1 |
| | (996-tone RU; contributes 0 user fields to the user specific field in the same HE-SIG-B content channel as this RU allocation subfield) | | | | | | | | | |
| 011101x₁x₀ | Reserved | | | | | | | | | 4 |
| 01111y₂y₁y₀ | Reserved | | | | | | | | | 8 |
| 10y₂y₁y₀z₂z₁z₀ | 106 | | | | 26 | 106 | | | | 64 |
| 11000y₂y₁y₀ | 242 | | | | | | | | | 8 |
| 11001y₂y₁y₀ | 484 | | | | | | | | | 8 |
| 11010y₂y₁y₀ | 996 | | | | | | | | | 8 |
| 11011y₂y₁y₀ | Reserved | | | | | | | | | 8 |
| 111x₄x₃x₂x₁x₀ | Reserved | | | | | | | | | 32 |

In the table 1, each row may be referred to as an entry (entry) representing an RU configuration case. Most RU configurations shown in the table 1 are in a range of the 242-tone, and a few RU configurations indicate that the RU is a 242-tone RU, a 484-tone RU, or a 996-tone RU. For example, in the first row in the table 1, that is, when the RU allocation subfield is "00000000", nine 26-tone RUs are allocated in a corresponding range of 20 MHz, and may correspond to a maximum of 1 user field. In the fifth row from the bottom in the table 1, that is, when the RU allocation subfield is "11000y₂y₁y₀", one 242-tone RU is allocated in a corresponding range of 20 MHz, and may correspond to a maximum of 8 user fields. A value of "y₂y₁y₀" may indicate a quantity of corresponding user fields. For example, a value "000" of "y₂y₁y₀" indicates 1 corresponding user field, and a value "001" of "y₂y₁y₀" indicates 2 corresponding user fields. The rest can be deduced by analogy.

Every 8-bit resource unit allocation subfield in the table 1 notifies an RU allocation status in a range of 20 MHz of a content channel corresponding to the resource unit allocation subfield. It may be understood that 20 MHz has one resource unit allocation subfield, 40 MHz has two resource unit allocation subfields, 80 MHz has four resource unit allocation subfields, and 160 MHz has eight resource unit allocation subfields. The rest can be deduced by analogy.

It should be noted that a sequence in which a user appears in the user specific field is consistent with a sequence of RUs obtained through division in a corresponding resource unit allocation subfield. The user may identify, by reading a STA identity (identity, ID) in the user field, whether the user field belongs to the user. With reference to a position at which the user field appears and a corresponding resource unit allocation subfield, the user may know an RU allocation status of the user and whether MU MIMO needs to be performed.

To effectively multiplex resources, in 802.11ax, content in the HE-SIG-B is represented by using a CC1 and a CC2 when a bandwidth is greater than or equal to 40 MHz. When a data packet bandwidth is 40 MHz, there are two content channels: the CC1 and the CC2. The CC1 includes a resource unit allocation subfield indicating a first 242-tone RU and a corresponding user specific field. The CC2 includes a resource unit allocation subfield indicating a second 242-tone RU and a corresponding user specific field, as shown in FIG. 3.

When a data packet bandwidth is 80 MHz, there are four content channels in total. The resource unit allocation subfield is indicated on the four channels in ascending order of frequencies in a structure of CC1, CC2, CC1, and CC2. The CC1 includes resource unit allocation subfields indicating the first 242-tone RU and the third 242-tone RU, and corresponding user specific fields. The CC2 includes resource unit subfields indicating the second 242-tone RU and the fourth 242-tone RU, and corresponding user specific fields. Array grouping in the case of higher bandwidth is similar to this, and details are not described again.

In conclusion, it may be learned that the CC1 and the CC2 each display a part of content of the resource unit allocation subfield. By reading information in the CC1 and the CC2, a user can fully know an RU allocation status corresponding to each 20 MHz. However, it should be noted that although a plurality of RU allocation modes are set for the resource unit allocation subfield in 802.11ax, allocating a plurality of RUs to a same user is not supported.

A resource allocation manner of 11be (EHT) is similar to that of 11ax, but 11be supports a larger bandwidth 320 MHz and can support an MRU, that is, a larger RU or a plurality of RUs may be allocated to one user. A method for supporting the foregoing change is not complex, that is, the original 8-bit resource unit allocation subfield is extended to 9-bit resource unit allocation subfield, as shown in the table 2.

**Table 2: Resource unit allocation subfield in 11be**

| Resource unit allocation subfield (B8, B7, B6, B5, B4, B3, B2, B1, B0) | #1 | #2 | #3 | #4 | #5 | #6 | #7 | #8 | #9 | Quantity |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 00001000 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| 000010000 | 26 | 26 | 26 | 26 | 26 | 106 | | | | 1 |
| 000010001 | 26 | 26 | 52 | | 26 | 106 | | | | 1 |
| 000010010 | 52 | | 26 | 26 | 26 | 106 | | | | 1 |
| 000010011 | 52 | | 52 | | 26 | 106 | | | | 1 |
| 000010100 | 106 | | | | 26 | 26 | 26 | 26 | 26 | 1 |
| 000010101 | 106 | | | | 26 | 26 | 26 | 52 | | 1 |
| 000010110 | 106 | | | | 26 | 52 | | 26 | 26 | 1 |
| 000010111 | 106 | | | | 26 | 52 | | 52 | | 1 |
| 000011000 | 52 | | 52 | | - | 52 | | 52 | | 1 |
| 000011001 | 106 | | | | 26 | 106 | | | | 1 |
| 000011010 | Punctured 242-tone RU (Punctured 242-tone RU) | | | | | | | | | 1 |
| 000011011 | 242-tone RU empty | | | | | | | | | 1 |
| 000011100 | 242-tone RU; allocated but contributes 0 user fields to a user specific field of an EHT-SIG content channel corresponding to the RU allocation subfield (242-tone RU; allocated but contributes 0 user fields to the user specific field in the same EHT-SIG content channel as this RU allocation subfield) | | | | | | | | | 1 |
| 000011101 | 484-tone RU; allocated but contributes 0 user fields to a user specific field of an EHT-SIG content channel corresponding to the RU allocation subfield (484-tone RU; allocated but contributes 0 user fields to the user specific field in the same EHT-SIG content channel as this RU allocation subfield) | | | | | | | | | 1 |
| 000011110 | 996-tone RU; allocated but contributes 0 user fields to a user specific field of an EHT-SIG content channel corresponding to the RU allocation subfield (996-tone RU; allocated but contributes 0 user fields to the user specific field in the same EHT-SIG content channel as this RU allocation subfield) | | | | | | | | | 1 |
| 000011111 | Validate (Validate) | | | | | | | | | 1 |
| 000100000 | 26 | 26 | 26 | 26 | 26 | 52+26 | | | 26 | 1 |
| 000100001 | 26 | 26 | 52 | | 26 | 52+26 | | | 26 | 1 |
| 000100011 | 52 | | 52 | | 26 | 52+26 | | | 26 | 1 |
| 000100100 | 26 | 52+26 | | | 26 | 26 | 26 | 26 | 26 | 1 |
| 000100101 | 26 | 52+26 | | | 26 | 26 | 26 | 52 | | 1 |
| 000100110 | 26 | 52+26 | | | 26 | 52 | | 26 | 26 | 1 |
| 000100111 | 26 | 52+26 | | | 26 | 52 | | 52 | | 1 |
| 000101000 | 26 | 26 | 26 | 26 | 106+26 | | | | | 1 |
| 000101001 | 26 | 26 | 52 | | 106+26 | | | | | 1 |
| 000101010 | 52 | | 26 | 26 | 106+26 | | | | | 1 |
| 000101011 | 52 | | 52 | | 106+26 | | | | | 1 |
| 000101100 | 106+26 | | | | | 26 | 26 | 26 | 26 | 1 |
| 000101101 | 106+26 | | | | | 26 | 26 | 52 | | 1 |
| 000101110 | 106+26 | | | | | 52 | | 26 | 26 | 1 |
| 000101111 | 106+26 | | | | | 52 | | 52 | | 1 |
| 000110000 | 106+26 | | | | | 106 | | | | 1 |
| 000110001 | 106+26 | | | | | 52+26 | | | 26 | 1 |
| 000110010 | 106 | | | | 106+26 | | | | | 1 |
| 000110011 | 26 | 52+26 | | | 106+26 | | | | | 1 |
| 000110100 | 106 | | | | 26 | 52+26 | | | 26 | 1 |
| 000110101 | 26 | 52+26 | | | 26 | 106 | | | | 1 |
| 000110110 | 26 | 52+26 | | | 26 | 52+26 | | | 26 | 1 |
| 000110111 | 52 | | | 52+26 | | 52 | | 52 | | 1 |
| 000111000-000111111 | Validate (Validate) | | | | | | | | | 8 |
| 001000 y₂y₁y₀ | 242 | | | | | | | | | 8 |
| 001001 y₂y₁y₀ | 484 | | | | | | | | | 8 |
| 001010 y₂y₁y₀ | 996 | | | | | | | | | 8 |
| 001011 y₂y₁y₀ | 2*996 | | | | | | | | | 8 |
| 001100 y₂y₁y₀ | MRU of pattern [gap-242]-242-484 (MRU of pattern [gap-242]-242-484) | | | | | | | | | 8 |
| 001101 y₂y₁y₀ | MRU of pattern 242-[gap-242]-484 (MRU of pattern 242-[gap-242]-484) | | | | | | | | | 8 |
| 001110 y₂y₁y₀ | MRU of pattern 484-[gap-242]-242 (MRU of pattern 484-[gap-242]-242) | | | | | | | | | 8 |
| 001111 y₂y₁y₀ | MRU of pattern 484-242-[gap-242] (MRU of pattern 484-242-[gap-242]) | | | | | | | | | 8 |
| 010000 y₂y₁y₀ | MRU of pattern [gap-484]-484-996 (MRU of pattern [gap-484]-484-996) | | | | | | | | | 8 |
| 010001 y₂y₁y₀ | MRU of pattern 484-[gap-484]-996 (MRU of pattern 484-[gap-484]-996) | | | | | | | | | 8 |
| 010010 y₂y₁y₀ | MRU of pattern 996-[gap-484]-484 | | | | | | | | | 8 |
| | (MRU of pattern 996-[gap-484]-484) | | | | | | | | | |
| 010011 y₂y₁y₀ | MRU of pattern 996-484-[gap-484] (MRU of pattern 996-484-[gap-484]) | | | | | | | | | 8 |
| 010100 y₂y₁y₀ | MRU of pattern [gap-996]-996-996-996 (MRU of pattern [gap-996]-996-996-996) | | | | | | | | | 8 |
| 010101 y₂y₁y₀ | MRU of pattern 996-[gap-996]-996-996 (MRU of pattern 996-[gap-996]-996-996) | | | | | | | | | 8 |
| 010110 y₂y₁y₀ | MRU of pattern 996-996-[gap-996]-996 (MRU of pattern 996-996-[gap-996]-996) | | | | | | | | | 8 |
| 010111 y₂y₁y₀ | MRU of pattern 996-996-996-[gap-996] (MRU of pattern 996-996-996-[gap-996]) | | | | | | | | | 8 |
| 011000 y₂y₁y₀ | MRU of pattern [gap-484]-484-996-996-996 (MRU of pattern [gap-484]-484-996-996-996) | | | | | | | | | 8 |
| 011001 y₂y₁y₀ | MRU of pattern 484-[gap-484]-996-996-996 (MRU of pattern 484-[gap-484]-996-996-996) | | | | | | | | | 8 |
| 011010 y₂y₁y₀ | MRU of pattern 996-[gap-484]-484-996-996 (MRU of pattern 996-[gap-484]-484-996-996) | | | | | | | | | 8 |
| 011011 y₂y₁y₀ | MRU of pattern 996-484-[gap-484]-996-996 (MRU of pattern 996-484-[gap-484]-996-996) | | | | | | | | | 8 |
| 011100 y₂y₁y₀ | MRU of pattern 996-996-[gap-484]-484-996 (MRU of pattern 996-996-[gap-484]-484-996) | | | | | | | | | 8 |
| 011101 y₂y₁y₀ | 996-996-484-[gap-484]-996 (MRU of pattern 996-996-484-[gap-484]-996) | | | | | | | | | 8 |
| 011110 y₂y₁y₀ | MRU of pattern 996-996-996-[gap-484]-484 (MRU of pattern 996-996-996-[gap-484]-484) | | | | | | | | | 8 |
| 011111 y₂y₁y₀ | MRU of pattern 996-996-996-484-[gap-484] (MRU of pattern 996-996-996-484-[gap-484]) | | | | | | | | | 8 |
| 100000 y₂y₁y₀ | MRU of pattern [gap-484]-484-996-996 (MRU of pattern [gap-484]-484-996-996) | | | | | | | | | 8 |
| 100001 y₂y₁y₀ | MRU of pattern 484-[gap-484]-996-996 | | | | | | | | | 8 |
| | (MRU of pattern 484-[gap-484]-996-996) | | | | | | | | | |
| 100010 y₂y₁y₀ | MRU of pattern 996-[gap-484]-484-996 (MRU of pattern 996-[gap-484]-484-996) | | | | | | | | | 8 |
| 100011 y₂y₁y₀ | MRU of pattern 996-484-[gap-484]-996 (MRU of pattern 996-484-[gap-484]-996) | | | | | | | | | 8 |
| 100100 y₂y₁y₀ | MRU of pattern 996-996-[gap-484]-484 (MRU of pattern 996-996-[gap-484]-484) | | | | | | | | | 8 |
| 100101 y₂y₁y₀ | MRU of pattern 996-996-484-[gap-484] (MRU of pattern 996-996-484-[gap-484]) | | | | | | | | | 8 |
| 100110 y₂y₁y₀-111111 y₂y₁y₀ | Reserved | | | | | | | | | 26*8 |

Similarly, each row in the table 2 may be referred to as an entry representing an RU configuration case. Due to the increase in bits, more entries may be used to represent allocation of more RUs or MRUs. For example, an entry "001101y2yly0" may be used to allocate a 242+Gap+484 MRU. The entry indicates that the first 20 MHz, the third 20 MHz, and the fourth 20 MHz in an 80 MHz form a 242+484-tone MRU and are allocated to a corresponding user. Similar to the HE allocation manner, the MRU may be represented through one or more resource unit allocation subfields. Similarly, each resource unit allocation subfield may correspond to 0 to a plurality of user fields.

In addition, in the trigger frame, a resource unit allocation subfield in the user information field may be used to allocate a resource unit to a specific user.

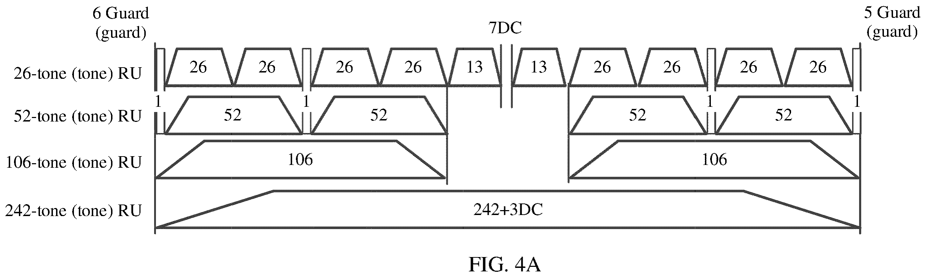

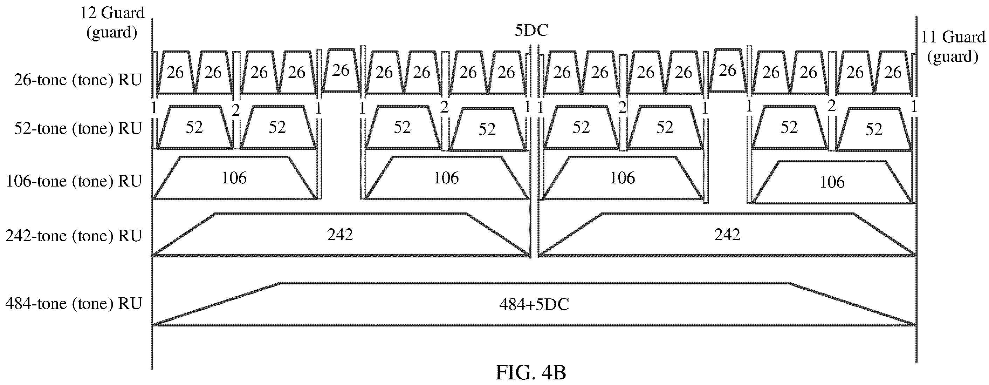

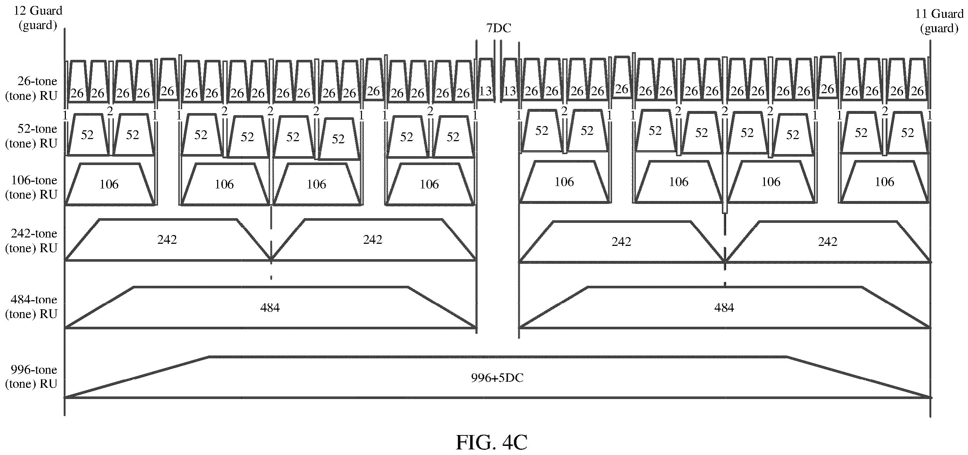

The following describes tone plans (tone plans) in different data packet bandwidths.
1. As shown in FIG. 4A, when a bandwidth is 20 MHz, the entire bandwidth may include an entire 242-tone RU, or may include various combinations of a 26-tone RU, a 52-tone RU, and a 106-tone RU. In addition to the RUs for data transmission, some guard (guard) subcarriers, null subcarriers, or direct current (direct current, DC) subcarriers are further included.
2. As shown in FIG. 4B, when a bandwidth is 40 MHz, the entire bandwidth is approximately equivalent to replication of a tone plan of 20 MHz, and the entire bandwidth may include an entire 484-tone RU or various combinations of a 26-tone RU, a 52-tone RU, a 106-tone RU, and a 242-tone RU.
3. As shown in FIG. 4C, when a bandwidth is 80 MHz, the entire bandwidth includes four resource units in units of 242-tone RU. There is a center 26-tone RU including two 13-tone subunits in the middle of the entire bandwidth. The entire bandwidth may include an entire 996-tone RU, or may include various combinations of a 26-tone RU, a 52-tone RU, a 106-tone RU, a 242-tone RU, and a 484-tone RU.
4. When a bandwidth is 160 MHz or 80 MHz+80 MHz, the entire bandwidth may be considered as replication of tone plans of two 80 MHz bandwidths. The entire bandwidth may include an entire 2*996-tone RU, or may include various combinations of a 26-tone RU, a 52-tone RU, a 106-tone RU, a 242-tone RU, a 484-tone RU, and a 996-tone RU.

All the foregoing tone plan is in units of 242-tone RU. A left side of the figure may be considered as a lowest frequency, and a right side of the figure may be considered as a highest frequency. From left to right, 242-tone RUs may be numbered 1^{st}, 2^{nd} ..., 8^{th}. It should be noted that, in a data field, the eight 242-tone RUs one-to-one correspond to eight 20 MHz channels in ascending order of frequencies, but because of existence of the center 26-tone RU, frequencies do not completely overlap.

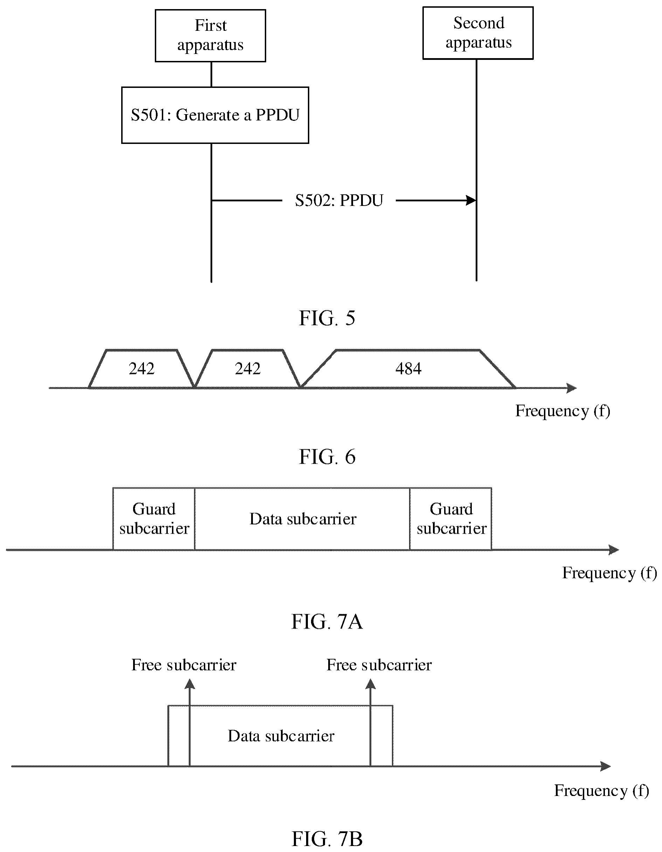

The following describes, with reference to FIG. 5, an information transmission method provided in an embodiment of this application. The method may include the following operations. In the embodiment shown in FIG. 5, a first apparatus may be a STA or an AP. Similarly, a second apparatus may be a STA or an AP. For example, when the first apparatus is a STA, the second apparatus may be an AP. When the first apparatus is an AP, the second apparatus may be a STA. For another example, when the first apparatus is a STA, the second apparatus may also be a STA; or when the first apparatus is an AP, the second apparatus may also be an AP.

S501: The first apparatus generates a PPDU.

In a possible implementation, the PPDU may include resource unit allocation information. The resource unit allocation information may indicate one or more resource units. In addition, the resource unit allocation information further indicates that the one or more resource units include a first subcarrier set and a second subcarrier set. It may be understood that the first subcarrier set and the second subcarrier set do not overlap. For example, a frequency corresponding to the first subcarrier set does not overlap a frequency corresponding to the second subcarrier set.

It should be noted that the resource unit mentioned in this embodiment of this application may be understood as an RU or an MRU. For example, one resource unit may be one RU or one MRU. For another example, the plurality of resource units may be a plurality of RUs or a plurality of MRUs. One MRU may include a plurality of RUs.

It may be understood that the first subcarrier set in this embodiment of this application may be understood as a data subcarrier, that is, a subcarrier used to carry data. The second subcarrier set may be understood as the foregoing free subcarriers, that is, subcarriers used to reduce a PAPR.

S502: The first apparatus sends the PPDU to the second apparatus.

Correspondingly, the second apparatus receives the PPDU.

The PPDU may include first data sent on the first subcarrier set and a sequence sent on the second subcarrier set. Optionally, the foregoing sequence may be a preset sequence, or may be a random sequence. Optionally, the sequence may not carry information. In other words, the sequence may be a meaningless sequence.

Based on this solution, in this embodiment of this application, the PAPR may be reduced through the free subcarrier. In addition, the first apparatus may indicate a position of the free subcarrier to the second apparatus, so that complexity of parsing data by the second apparatus can be reduced.

In a possible implementation, the resource unit allocation information in S501 may indicate that the allocated resource unit includes the second subcarrier set when the resource unit is allocated. In another possible implementation, the resource unit allocation information in S501 may alternatively be carried in an RU allocation subfield, or may be carried in a punctured channel information field (punctured channel information field). The following separately uses a case 1 and a case 2 for description.

Case 1: The resource unit allocation information is carried in the RU allocation subfield. In this case, on the basis that the RU or MRU notification is supported by the RU allocation subfield, the RU allocation subfield may further indicate that the allocated RU or MRU includes the second subcarrier set. The following provides specific descriptions through different examples.

Example 1: The RU allocation subfield may indicate that all subcarriers included in an RU or an MRU are second subcarriers, or the RU allocation subfield may indicate that an RU or an MRU includes only the second subcarrier set.

It should be noted that, that an RU or an MRU includes only the second subcarrier set is for a non-pilot subcarrier. The foregoing content may be understood as that an RU or an MRU does not include the first subcarrier. Details are not described below. Similarly, in this embodiment of this application, that an RU or an MRU includes only the first subcarrier set is also for a non-pilot subcarrier. It may be understood that an RU or an MRU does not include the second subcarrier.

In the example 1, a newly added entry may indicate that an MRU or an RU includes only the second subcarrier set, or an original entry may indicate that an MRU or an RU includes only the second subcarrier set. The following separately describes a manner 1 and a manner 2.

Manner 1: In the manner 1, an entry may be newly added to the RU allocation subfield, and the newly added entry may notify, when indicating the RU or the MRU, that the RU or the MRU includes only the second subcarrier set.

For example, an entry may be newly added to the table 1 or the table 2. The newly added entry may indicate that all subcarriers included in the RU or the MRU are second subcarriers, and correspond to 0 user fields. The newly added entry indicates that the allocated RU or MRU includes only the second subcarrier set, that is, the newly added entry indicates that the allocated RU or MRU is not used for data transmission. Therefore, in this possible case, the second apparatus may determine, based on the newly added entry, that the allocated RU or MRU includes only the second subcarrier set.

In this embodiment of this application, the newly added entry may be 8 bits that are not used and that are newly added to the table 1. For example, the newly added entry may include one or more of the following: 11011y₂y₁y₀ or 111x₄x₃x₂x₁x₀. Values of x₄, x₃, x₂, x₁, x₀, y₂, y₁, and y₀ are 0 or 1.

Alternatively, the newly added entry may be 9 bits that are not used and that are newly added to the table 2. For example, the newly added entry may include one or more of the following: 100110y₂y₁y₀-111111y₂y₁y₀. Values of y₂, y₁, and y₀ are 0 or 1.

Optionally, the newly added entry may alternatively extend 9 bits in the table 2 to more bits such as 10 bits and 11 bits.

It may be understood that the value of the newly added entry shown above is merely used as an example. The value of the newly added entry is not limited in embodiments of this application. Details are not described below.

The following uses an 80 MHz PPDU as an example for description. There are four corresponding RU allocation subfields in total. For example, an RU allocation subfield corresponding to a CC1 may include a newly added entry "11011000", and the entry may indicate that an allocated 242-tone RU includes only the second subcarrier set and corresponds to 0 user fields. Another RU allocation subfield corresponding to the CC1 may include an original entry "11001000", and the entry indicates that an allocated 484-tone RU corresponds to 1 user field. Two RU allocation subfields corresponding to a CC2 respectively include an original entry "11000000" and the original entry "11001000". The entry "11000000" indicates that the allocated 242-tone RU corresponds to the 1 user field, and the entry "11001000" indicates that the allocated 484-tone RU corresponds to the 1 user field. The foregoing content may be shown in the table 3.

**Table 3: Example in which the RU allocation subfield indicates that the resource unit includes only the second subcarrier set**

| | Entry indication content corresponding to the RU allocation subfield | Entry indication content corresponding to the RU allocation subfield |
|---|---|---|
| Content channel 1 (CC1) | 242-tone (0 user fields, second subcarrier) | 484-tone (1 user field) |
| Content channel 2 (CC2) | 242-tone (1 user field) | 484-tone (1 user field) |

The resource unit shown in FIG. 6 is allocated in the table 3. The first 242-tone RU in the table 3 is allocated by a newly added entry. In this case, the first 242-tone RU includes only the second subcarrier set. The second 242-tone RU and the 484-tone RU are allocated through original entries. In this case, the second 242-tone RU and the 484-tone RU do not include the second subcarrier. The second 242-tone RU corresponds to 1 user field, and the 484-tone RU corresponds to 2 user fields.

In the following, an 80 MHz PPDU is used as an example. There are four corresponding RU allocation subfields in total. For example, the RU allocation subfield corresponding to the CC1 may include a newly added entry "100110000", and the entry may indicate that the allocated 242-tone+Gap+484-tone MRU includes only the second subcarrier set and corresponds to 0 user fields. Another RU allocation subfield corresponding to the CC1 may include the newly added entry "100110000". Two RU allocation subfields corresponding to the CC2 respectively include an original entry "001000000" and the newly added entry "100110000". The entry "001000000" indicates that the allocated 242-tone RU corresponds to 1 user field. The foregoing content may be shown in the table 4.

**Table 4: Example in which the RU allocation subfield indicates that the resource unit includes only the second subcarrier**

| | Entry indication content corresponding to the RU allocation subfield | Entry indication content corresponding to the RU allocation subfield |
|---|---|---|
| Content channel 1 (CC1) | 242-tone+Gap+484-tone (0 user fields, second subcarrier) | 242-tone+Gap+484-tone (0 user fields, second subcarrier) |
| Content channel 2 (CC2) | 242-tone (1 user field) | 242-tone+Gap+484-tone (0 user fields, second subcarrier) |

The resource unit shown in FIG. 6 is allocated in the table 4. In the table 4, 242-tone+Gap+484-tone RU is allocated through a newly added entry. In this case, 242-tone+Gap-484-tone RU includes only the second subcarrier set. The second 242-tone RU is allocated through an original entry. In this case, the second 242-tone RU does not include the second subcarrier set. The second 242-tone RU corresponds to 1 user field.

It should be noted that currently, sizes supported by an MRU greater than 242-tone are 484+242, 996+484, 2*996+484, 3*996+484, 3*996, 242+484+996, and the like. These MRUs may indicate, in the manner of the foregoing newly added entry, that the MRUs include only the second subcarrier set, and more other MRUs may also be supported in the foregoing manner. In addition, actually, only one "242-tone RU, 0 user fields, including only the second subcarrier set" needs to be established to represent various cases of MRUs larger than 242-tone. For an RU smaller than 242-tone, a newly added entry may indicate RU allocation in a 20 MHz channel corresponding to the RU allocation subfield, and some RUs include only the second subcarrier set. In this case, the free subcarrier RU may not be followed by the user field.

Manner 2: In the manner 2, an original entry may indicate that an RU or an MRU includes only the second subcarrier set.

In a possible case, an identifier of a user field corresponding to an original entry may be a special value, to indicate that an RU or an MRU allocated to the original entry includes only the second subcarrier set. In this case, an original correspondence between the user field and the RU allocation subfield is not changed, but a special identifier of the user field is set to indicate that the RU or the MRU includes only the second subcarrier set. In this possible case, the second apparatus may determine that the RU or the MRU allocated to the entry corresponding to the user field whose identifier is the special value includes only the second subcarrier set.

For example, the special value may be 2046, all 0s, all 1s, or the like. This is not specifically limited in this application. For example, the special value is 2046. It is assumed that an original entry "11000000" in the table 1 indicates a 242-tone RU, the 242-tone RU corresponds to a user field, and an identifier of the user field is 2046. In this case, the 242-tone RU includes only the second subcarrier set. For another example, it is assumed that an original entry "001100000" in the table 2 indicates a [gap 242]+242+484-tone MRU, the [gap 242]+242+484-tone MRU corresponds to a user field, and an identifier of the user field is 2046. In this case, the 242-tone+996-tone MRU includes only the second subcarrier set.

Based on the foregoing solution, when the first apparatus indicates the available RU or MRU to the second apparatus through the RU allocation subfield, the first apparatus may indicate, to the second apparatus through the identifier of the user field being the special value, that an RU or an MRU includes only the second subcarrier. In this way, complexity of parsing data by the second apparatus is reduced while the PAPR is reduced.

In another possible case, on the basis that the original entry indicates the RU or the MRU, first indication information may be added to indicate that the RU or the MRU allocated through the original entry includes only the second subcarrier set.

For example, the first apparatus may send the first indication information to the second apparatus, where the first indication information may indicate that an RU or an MRU allocated to the second apparatus includes only the second subcarrier set. Optionally, the first indication information may be carried in the PPDU for sending. For example, the first indication information may be carried in a common field or a user-specific field. For example, the first indication information may be carried in a reserved field or a newly added field in the common field. For another example, the first indication information may be carried in a reserved field or a newly added field in the user specific field. Alternatively, the first indication information may be separately sent. For example, the first indication information may be sent after the first apparatus allocates an RU or an MRU to the second apparatus. This is not specifically limited in this application.

It should be noted that a form of the first indication information is not specifically limited in this application. For example, the first indication information may be 1-bit information. When a value of the first indication information is "0", it indicates that the RU or the MRU does not include the second subcarrier set; or when a value of the first indication information is "1", it indicates that the RU or the MRU includes only the second subcarrier set. On the contrary, when a value of the first indication information is "1", it indicates that the RU or the MRU does not include the second subcarrier set; or when a value of the first indication information is "0", it indicates that the RU or the MRU includes only the second subcarrier set.

Based on the foregoing solution, when the first apparatus indicates the available RU or MRU to the second apparatus through the RU allocation subfield, the first apparatus may indicate, to the second apparatus based on the first indication information, that an RU or an MRU includes only the second subcarrier.

Example 2: The RU allocation subfield may indicate that a resource unit includes the first subcarrier set and the second subcarrier set. The solution provided in the example 2 may be understood as that the RU allocation subfield may indicate that an RU includes the first subcarrier set and the second subcarrier set, or the RU allocation subfield may indicate that an MRU includes the first subcarrier set and the second subcarrier set.

Similarly, in the example 2, a newly added entry may indicate that an MRU or an RU includes the first subcarrier set and the second subcarrier set, or an original entry may indicate that an MRU or an RU includes the first subcarrier set and the second subcarrier set. The following separately describes a manner 3 and a manner 4.

Manner 3: In the manner 3, an entry of the RU allocation subfield may be newly added. The newly added entry may notify, when indicating the RU or the MRU, that the RU or the MRU includes the first subcarrier set and the second subcarrier set.

For example, an entry may be newly added to the table 1 or the table 2, and the newly added entry may indicate that the RU or the MRU includes the first subcarrier set and the second subcarrier set.

The following uses an 80 MHz PPDU as an example for description. There are four corresponding RU allocation subfields in total. For example, the RU allocation subfield corresponding to the CC1 may include a newly added entry "111111000", and the entry may indicate that the allocated 242-tone+Gap+484-tone MRU includes the first subcarrier set and the second subcarrier set, and corresponds to 1 user field. Another RU allocation subfield corresponding to the CC1 includes a newly added entry "111111000". Two RU allocation subfields corresponding to the CC2 respectively include an original entry "001000000" and a newly added entry "111111000". The entry "001000000" indicates that the allocated 242-tone RU corresponds to 1 user field. The CC1 and the CC2 may be described as shown in the table 5.

**Table 5: Example in which the RU allocation subfield indicates that the resource unit includes the first subcarrier and the second subcarrier**

| | Entry indication content corresponding to the RU allocation subfield | Entry indication content corresponding to the RU allocation subfield |
|---|---|---|
| Content channel 1 (CC1) | 242-tone+Gap 242+484-tone (first subcarrier+second subcarrier) (1 user field) | 242-tone+Gap 242+484-tone (first subcarrier+second subcarrier) (1 user field) |
| Content channel 2 (CC2) | 242-tone (first subcarrier) (1 user field) | 242-tone+Gap 242+484-tone (first subcarrier+second subcarrier) (0 user fields) |

The resource unit shown in FIG. 6 is allocated in the table 5. In the table 5, 242-tone+Gap 242+484-tone is allocated through a newly added entry. In this case, 242-tone+Gap 242+484-tone includes the first subcarrier set and the second subcarrier set. The 242-tone RU is allocated through an original entry. In this way, the 242-tone RU includes only the first subcarrier, and the 242-tone RU corresponds to 1 user field.

It should be noted that the newly added entry in the manner 3 may indicate that the RU or the MRU includes the first subcarrier set and the second subcarrier set. In this case, a position of the first subcarrier set and a position of the second subcarrier set may be pre-agreed on, for example, may be predefined in a protocol or preconfigured.

For example, subcarriers included in an RU that includes a smallest quantity of subcarriers and that is in the MRU are the second subcarrier set. The 242-tone+Gap 242+484-tone MRU is used as an example. Subcarriers included in the 242-tone RU are the second subcarrier set. For another example, when the resource unit is an MRU, subcarriers included in an RU that is with a lowest frequency and that is included in the MRU are the second subcarrier set. A 3*996-tone MRU is used as an example. Subcarriers included in an RU with a lowest frequency, that is, the first 996-tone RU, are the second subcarrier set.

For another example, subcarriers at fixed positions in the RU or the MRU, for example, X subcarriers with low frequencies, are the second subcarrier set. A 26-tone RU is used as an example. X subcarriers with low frequencies are the second subcarrier set. It may be understood that X may be predefined, may be specified in a protocol, or may be preconfigured. This is not specifically limited in this application.

Optionally, when sizes of RUs included in the MRU are the same, subcarriers at fixed positions may be used as the second subcarrier set. For example, subcarriers included in an RU with a lowest frequency are used as the second subcarrier set. A 3*996-tone MRU is used as an example. Subcarriers included in a 996-tone RU with a lowest frequency are the second subcarrier set.

In an example, the newly added entry in the manner 3 may alternatively indicate which part of subcarriers in the allocated RU or MRU are the second subcarriers and which part of subcarriers are the first subcarriers.

The following uses an 80 MHz PPDU as an example for description. There are four corresponding RU allocation subfields in total. For example, the RU allocation subfield corresponding to the CC1 may include a newly added entry "111111001", and the entry may indicate that the allocated 242-tone+Gap+484-tone MRU includes the first subcarrier set and the second subcarrier set, and corresponds to 1 user field. Another RU allocation subfield corresponding to the CC1 includes a newly added entry "111111001". Two RU allocation subfields corresponding to the CC2 respectively include an original entry "001000000" and a newly added entry "111111001". The entry "001000000" indicates that the allocated 242-tone RU corresponds to 1 user field. The CC1 and the CC2 may be described as shown in the table 6.

**Table 6: Example in which the RU allocation subfield indicates that the resource unit includes the first subcarrier and the second subcarrier**

| | Entry indication content corresponding to the RU allocation subfield | Entry indication content corresponding to the RU allocation subfield |
|---|---|---|
| Content channel 1 (CC1) | 242-tone (second subcarrier)+Gap 242+484-tone (first subcarrier) (1 user field) | 242-tone (second subcarrier)+Gap 242+484-tone (first subcarrier) (1 user field) |
| Content channel 2 (CC2) | 242-tone (first subcarrier) (1 user field) | 242-tone (second subcarrier)+Gap 242+484-tone (first subcarrier) (0 user fields) |

The resource unit shown in FIG. 6 is allocated in the table 6. In the table 6, 242-tone+Gap 242+484-tone is allocated through a newly added entry. In this case, 242-tone+Gap 242+484-tone includes the first subcarrier set and the second subcarrier set. The newly added entry indicates that the 242-tone RU in the 242-tone+Gap 242+484-tone MRU includes only the second subcarrier set, and the 484-tone RU in the 242-tone+Gap 242+484-tone MRU includes only the first subcarrier set. In addition, the second 242-tone RU in FIG. 6 is allocated through an original entry. In this case, the second 242-tone RU includes only the first subcarrier, and the 242-tone RU corresponds to 1 user field.

Based on the foregoing solution, when the first apparatus indicates the available RU or MRU to the second apparatus through the RU allocation subfield, the first apparatus may notify the second apparatus that the RU or the MRU includes the first subcarrier set and the second subcarrier set.

### Manner 4:

In the example 2, an original entry may indicate that an RU or an MRU includes the first subcarrier set and the second subcarrier set.

In a possible case, on the basis that the original entry indicates the RU or the MRU, second indication information may be added to indicate that the RU or the MRU allocated through the original entry includes the first subcarrier set and the second subcarrier set. For example, the first apparatus may send second indication information to the second apparatus, where the second indication information may indicate that an RU or an MRU allocated to the second apparatus includes the first subcarrier set and the second subcarrier set. Optionally, the first indication information may be carried in the PPDU for sending, or may be separately sent. For implementation, refer to the first indication information. This is not specifically limited in this application.

It should be noted that a form of the second indication information is not specifically limited in this application. For example, the second indication information may be 1-bit information.

Optionally, when the second indication information indicates that the RU or the MRU includes the first subcarrier set and the second subcarrier set, a position of the second subcarrier set included in the RU or the MRU may be agreed on, for example, may be predefined in a protocol or preconfigured, for implementation, refer to the manner 3. Details are not described herein again.

Optionally, the second indication information may not only indicate that the RU or the MRU includes the first subcarrier set and the second subcarrier set, but also specifically indicate which part of subcarriers in the RU or the MRU are the second subcarrier set. Details are not described again in this application.

Case 2: The resource allocation information is carried in the punctured channel information field.

In this case, the STA may determine, based on the punctured channel information field, an RU or an MRU that can be used by the STA, or may determine, based on the punctured channel information field, that an RU or an MRU includes the second subcarrier set. A difference between the case 2 and the case 1 lies in that, in the case 1, RUs or MRUs of a plurality of STAs may be indicated through the RU allocation subfield, but in the case 2, an RU or an MRU of one STA may be indirectly indicated based on the punctured channel information field. The case 2 may be understood as that, with reference to the PPDU bandwidth, the punctured channel information field may indicate channel puncturing information in the PPDU bandwidth, and a remaining available channel may form an RU or an MRU, and the RU or the MRU is used as an RU or an MRU for data transmission. The case 2 is applicable to a non-orthogonal frequency division multiplexing access (orthogonal frequency division multiplexing access, OFDMA) mode. An index table of the punctured channel information field is shown in the table 7.

**Table 7: Punctured channel information field**

| PPDU bandwidth | Meaning | Puncturing pattern (RU or MRU index) | Entry value |
|---|---|---|---|
| 20 MHz | No puncturing (No | [1] | 0 |
| | puncturing) | (242-tone RU 1) | |
| 40 MHz | No puncturing (No puncturing) | [1 1] (484-tone RU 1) | 0 |
| 80 MHz | No puncturing (No puncturing) | [1 1 1 1] (996-tone RU 1) | 0 |
| | 20 MHz puncturing (20 MHz puncturing) | [x 1 1 1] (484+242-tone MRU 1) | 1 |
| | | [1 x 1 1] (484+242-tone MRU 2) | 2 |
| | | [1 1 x 1] (484+242-tone MRU 3) | 3 |
| | | [1 1 1 x] (484+242-tone MRU 4) | 4 |
| 160 MHz | No puncturing (No puncturing) | [1 1 1 1 1 1 1 1] (2*996-tone RU 1) | 0 |
| | 20 MHz puncturing (20 MHz puncturing) | [x 1 1 1 1 1 1 1] (996+484+242-tone MRU 1) | 1 |
| | | [1 x 1 1 1 1 1 1] (996+484+242-tone MRU 2) | 2 |
| | | [1 1 x 1 1 1 1 1] (996+484+242-tone MRU 3) | 3 |
| | | [1 1 1 x 1 1 1 1] (996+484+242-tone MRU 4) | 4 |
| | | [1 1 1 1 x 1 1 1] (996+484+242-tone MRU 5) | 5 |
| | | [1 1 1 1 1 x 1 1] (996+484+242-tone MRU 6) | 6 |
| | | [1 1 1 1 1 1 x 1] (996+484+242-tone MRU 7) | 7 |
| | | [1 1 1 1 1 1 1 x] (996+484+242-tone MRU 8) | 8 |
| | 40 MHz | [x x 1 1 1 1 1 1] | 9 |
| | puncturing (40 MHz puncturing) | (996+484-tone MRU 1) | |
| | | [1 1 x x 1 1 1 1] (996+484-tone MRU 2) | 10 |
| | | [1 1 1 1 x x 1 1] (996+484-tone MRU 3) | 11 |
| | | [1 1 1 1 1 1 x x] (996+484-tone MRU 4) | 12 |
| 320 MHz | No puncturing (No puncturing) | [1 1 1 1 1 1 1 1] (4*996-tone RU 1) | 0 |
| | 40 MHz puncturing (40 MHz puncturing) | [x 1 1 1 1 1 1 1] (3*996+484-tone MRU 1) | 1 |
| | | [1 x 1 1 1 1 1 1] (3*996+484-tone MRU 2) | 2 |
| | | [1 1 x 1 1 1 1 1] (3*996+484-tone MRU 3) | 3 |
| | | [1 1 1 x 1 1 1 1] (3*996+484-tone MRU 4) | 4 |
| | | [1 1 1 1 x 1 1 1] (3*996+484-tone MRU 5) | 5 |
| | | [1 1 1 1 1 x 1 1] (3*996+484-tone MRU 6) | 6 |
| | | [1 1 1 1 1 1 x 1] (3*996+484-tone MRU 7) | 7 |
| | 80 MHz puncturing (80 MHz puncturing) | [x x 1 1 1 1 1 1] (3*996-tone MRU 1) | 9 |
| | | [1 1 x x 1 1 1 1] (3*996-tone MRU 2) | 10 |
| | | [1 1 1 1 x x 1 1] (3*996-tone MRU 3) | 11 |
| | | [1 1 1 1 1 1 x x] (3*996-tone MRU 4) | 12 |
| | | [x x 1 1 1 1 1 1] | 9 |
| | | (3*996-tone MRU 1) | |
| | | [1 1 x x 1 1 1 1] (3*996-tone MRU 2) | 10 |
| | | [1 1 1 1 x x 1 1] (3*996-tone MRU 3) | 11 |
| | Concurrent 80 MHz and 40 MHz puncturing (Concurrent 80 MHz and 40 MHz puncturing) | [x x x 1 1 1 1 1] (2*996+484-tone MRU 7) | 13 |
| | | [x x 1 x 1 1 1 1] (2*996+484-tone MRU 8) | 14 |
| | | [x x 1 1 x 1 1 1] (2*996+484-tone MRU 9) | 15 |
| | | [x x 1 1 1 x 1 1] (2*996+484-tone MRU 10) | 16 |
| | | [x x 1 1 1 1 x 1] (2*996+484-tone MRU 11) | 17 |
| | | [x x 1 1 1 11 x] (2*996+484-tone MRU 12) | 18 |
| | | [x 1 1 1 1 1 x x] (2*996+484-tone MRU 1) | 19 |
| | | [1 x 1 1 1 1 x x] (2*996+484-tone MRU 2) | 20 |
| | | [1 1 x 1 1 1 x x] (2*996+484-tone MRU 3) | 21 |
| | | [1 1 1 x 1 1 x x] (2*996+484-tone MRU 4) | 22 |
| | | [1 1 1 1 x 1 x x] (2*996+484-tone MRU 5) | 23 |
| | | [1 1 1 1 1 xxx] (2*996+484-tone MRU 6) | 24 |

In the table 7, each row may be referred to as an entry representing one type of puncturing information. For example, when the PPDU is 80 MHz, the punctured channel information field is "00010", that is, when the value is "2", the corresponding puncturing pattern is "1X11", indicating that the second 20 MHz RU in the 80 MHz bandwidth is punctured. The STA may determine that the 484+242-tone MRU is used for data transmission.

It may be understood that each entry in the table 7 may include 5 bits, and indicates puncturing information in a PPDU bandwidth, to indirectly notify an RU or an MRU that is used to transmit data. In the table 7, in different PPDU bandwidths, only some entries are used. For example, for the 20 MHz PPDU bandwidth, only an entry whose value is 0 is used, that is, "00000". For the 40 MHz PPDU bandwidth, only an entry whose value is 0 is used, that is, "00000". For the 80 MHz PPDU bandwidth, only entries whose values are 0, 1, 2, 3, and 4 are used, which are respectively "00000", "00010", "00011", "00100", and "00101". The rest can be deduced by analogy.

In the case 2, the punctured channel information field may indicate that an RU or an MRU includes only the second subcarrier set, or the punctured channel information field may indicate that an RU or an MRU includes the first subcarrier set and the second subcarrier set. The following provides descriptions through different examples.

Example 3: The punctured channel information field may indicate that an RU or an MRU includes only the second subcarrier set.

In a possible example, an entry of the punctured channel information field may be added to indicate that an MRU or an RU includes only the second subcarrier set. The newly added entry of the punctured channel information field may notify, while notifying the puncturing information, that an RU or an MRU including a remaining available channel includes only the second subcarrier set.

In this embodiment of this application, the newly added entry of the punctured channel information field may be 5 bits that are not used and that are newly added to the table 7. For example, the newly added entry may include "00110, 00111, 01000, 01001, 01010, 01011, 01100, 01101, 01110, 01111, 10000, 10001, 10010, 10011, 10100, 10101, 10110, 10111, 11000, 11001, 11010, 11011, 11100, 11101, 11110, 11111", and the like in an 80 MHz PPDU bandwidth. Alternatively, the newly added entry may extend 5 bits to 6 bits, 7 bits, or even more bits.

It may be understood that the foregoing entries of the newly added punctured channel information field are merely shown as examples. A value of the entries of the newly added punctured channel information field is not limited in embodiments of this application. Details are not described below.

For example, for the 80 MHz PPDU bandwidth, the punctured channel information field carried in the PPDU is a newly added entry "11011" corresponding to "1X11", the newly added entry in the punctured channel information field indicates that the second RU in the 80 MHz bandwidth cannot be used for data transmission, and an RU corresponding to the first 20 MHz, an RU corresponding to the third 20 MHz, and an RU corresponding to the fourth 20 MHz include only the second subcarrier set. In this case, the second apparatus may determine the available RU based on the newly added entry in the punctured channel information field, and the available RU includes only the second subcarrier set.

In another possible example, an original punctured channel information field may indicate that an MRU or an RU includes only the second subcarrier set. For example, on the basis that the original punctured channel information field indicates the puncturing information, third indication information may be added to indicate that the available RU or MRU indicated by the original punctured channel information field includes only the second subcarrier set. In this possible case, the second apparatus may determine the second subcarrier set based on the third indication information.

For example, the first apparatus may send the third indication information to the second apparatus, where the third indication information may indicate that an RU or an MRU allocated to the second apparatus includes only the second subcarrier set. Optionally, the third indication information may be carried in the PPDU for sending, or may be separately sent. For implementation, refer to the first indication information. This is not specifically limited in this application.

Based on the foregoing solution, in a non-OFDMA mode, the first apparatus may indicate the available RU or MRU to the second field through the punctured channel information field, and indicate, to the second apparatus, that the RU or the MRU includes only the second subcarrier set. In this way, complexity of parsing data by the second apparatus is reduced while the PAPR is reduced.

Example 4: The punctured channel information field may indicate that an RU or an MRU includes the first subcarrier set and the second subcarrier set.

In a possible example, an entry of the punctured channel information field may be added to indicate a first subcarrier set and a second subcarrier set of an MRU or an RU. The newly added entry of the punctured channel information field may notify, while notifying the puncturing information, that an RU or an MRU including a remaining available channel includes the first subcarrier set and the second subcarrier set.

For example, for the 80 MHz PPDU bandwidth, the punctured channel information field carried in the PPDU is a newly added entry "11010" corresponding to "1111", the newly added entry in the punctured channel information field indicates that all RUs in the 80 MHz bandwidth can be used for data transmission, an RU corresponding to the first 20 MHz, an RU corresponding to the second 20 MHz, an RU corresponding to the third 20 MHz, and an RU corresponding to the fourth 20 MHz include the first subcarrier set and the second subcarrier set.

Optionally, when the newly added entry of the punctured channel information field indicates that the available RU or MRU includes the first subcarrier set and the second subcarrier set, a position of the second subcarrier set may be implemented through agreement, for example, may be predefined in a protocol or preconfigured. For details, refer to related descriptions in the example 1 and the example 2. Details are not described herein again.

Optionally, when the newly added entry of the punctured channel information field indicates that the available RU or MRU includes the first subcarrier set and the second subcarrier set, fourth indication information may indicate which part of the available RUs or MRUs indicated by the newly added entry of the punctured channel information field is the first subcarrier set and which part of the available RUs or MRUs indicated by the newly added entry of the punctured channel information field is the second subcarrier set.

Optionally, the fourth indication information may be carried in the PPDU for sending, for example, may be carried in a reserved field or a newly added field in the PPDU. For another example, the fourth indication information may be carried in a reserved field or a newly added field in a user signal field (user signal field, U-SIG). This is not specifically limited in this application.

In a possible case, the fourth indication information may be implemented through a bitmap. The bitmap may indicate whether RUs or MRUs from a low frequency to a high frequency in available RUs or MRUs indicated by a newly added entry in the punctured channel information field include only the first subcarrier or only the second subcarrier. For example, when a value of a bit in the bitmap is "0", it may indicate that a corresponding RU or MRU includes only the second subcarrier set. On the contrary, when a value of a bit in the bitmap is "1", it may indicate that a corresponding RU or MRU includes only the second subcarrier set.

For example, the bitmap is 4 bits. If the bitmap is "1011", it may be considered that the second RU includes only the second subcarrier set. On the contrary, if the bitmap is "0100", it may be considered that subcarriers included in the second RU are the second subcarrier set.

It should be noted that the 4 bits are merely shown as an example of a length of the bitmap, and do not constitute a limitation on the length of the bitmap. The length of the bitmap may be 5 bits, 6 bits, 8 bits, or the like. This is not specifically limited in this application. It is assumed that the length of the bitmap is 4 bits, the MRU currently includes a maximum of four RUs, and the 4-bit bitmap may indicate whether RUs from a low frequency to a high frequency include only the first subcarrier or only the second subcarrier. If the MRU includes only two RUs, the last two bits of the bitmap may be reserved. By analogy, if the MRU includes only three RUs, the last one bit of the bitmap may be reserved.

In another possible example, an original punctured channel information field may indicate a first subcarrier set and a second subcarrier set of an MRU or an RU. For example, on the basis that the original punctured channel information field indicates the puncturing information, fifth indication information may be added to indicate that the available RU or MRU indicated by the original punctured channel information field includes the first subcarrier set and the second subcarrier set. In this possible case, the second apparatus may determine the second subcarrier set based on the fourth indication information.

For example, the first apparatus may send the fifth indication information to the second apparatus, where the fifth indication information may indicate that the RU or the MRU allocated to the second apparatus includes the first subcarrier set and the second subcarrier set. Optionally, the fifth indication information may be carried in the PPDU for sending, or may be separately sent. For implementation, refer to the fourth indication information. This is not specifically limited in this application. Optionally, the fourth indication information may be implemented through a bitmap.

The foregoing case 1 and case 2 describe implementations in which the resource unit allocation information indicates that the one or more resource units include the second subcarrier set. This embodiment of this application further provides another possible implementation. In this implementation, the second subcarrier is not at a granularity of an RU or an MRU, but at a granularity of a subcarrier. For example, the second subcarrier set may include one or more of a part of subcarriers included in the RU or the MRU, a null subcarrier, a guard subcarrier, or a pilot subcarrier.

In this implementation, a position of the second subcarrier may be notified based on signaling information, or may be pre-agreed on. For example, in FIG. 7A, the second subcarrier set includes a guard subcarrier. For example, the first apparatus notifies, based on signaling information, the second apparatus that the guard subcarrier is the second subcarrier. In this case, the second apparatus may use guard subcarriers on two sides of the data subcarrier as second subcarriers, to reduce the PAPR. The PPDU may be transmitted by using the data subcarrier, that is, transmitted by using the first subcarrier.

For example, in FIG. 7B, the second subcarrier set includes a data subcarrier in an RU or an MRU. For example, data subcarriers at fixed positions may be used as the second subcarrier set in a pre-agreed manner. In this case, the second apparatus may use the pre-agreed data subcarrier as the second subcarrier, to reduce the PAPR. The PPDU may be transmitted by using a remaining data subcarrier, namely, the first subcarrier.

In a possible implementation, the first apparatus may notify, based on signaling information, the first apparatus to transmit data without using the second subcarrier or transmit data using the second subcarrier.

For example, the signaling information may indicate that the PPDU in S501 is transmitted without using the second subcarrier or is transmitted by using the second subcarrier. The signaling information may be carried in the PPDU, or may be separately transmitted without being carried in the PPDU. For example, the signaling information may be 1-bit information. When a value of the signaling information is "0", it may indicate that the PPDU is transmitted without using the second subcarrier; or when a value of the signaling information is "1", it may indicate that the PPDU is transmitted by using the second subcarrier. On the contrary, when a value of the signaling information is "1", it may indicate that the PPDU is transmitted without using the second subcarrier; or when a value of the signaling information is "0", it may indicate that the PPDU is transmitted by using the second subcarrier.

If the signaling information indicates that the PPDU is transmitted by using the second subcarrier, a position of the second subcarrier set may be pre-agreed on, or may be indicated by the signaling information. This is not specifically limited in this application. For example, the second subcarrier set may include one or more of a part of subcarriers included in the RU or the MRU, a null subcarrier, a guard subcarrier, or a pilot subcarrier.

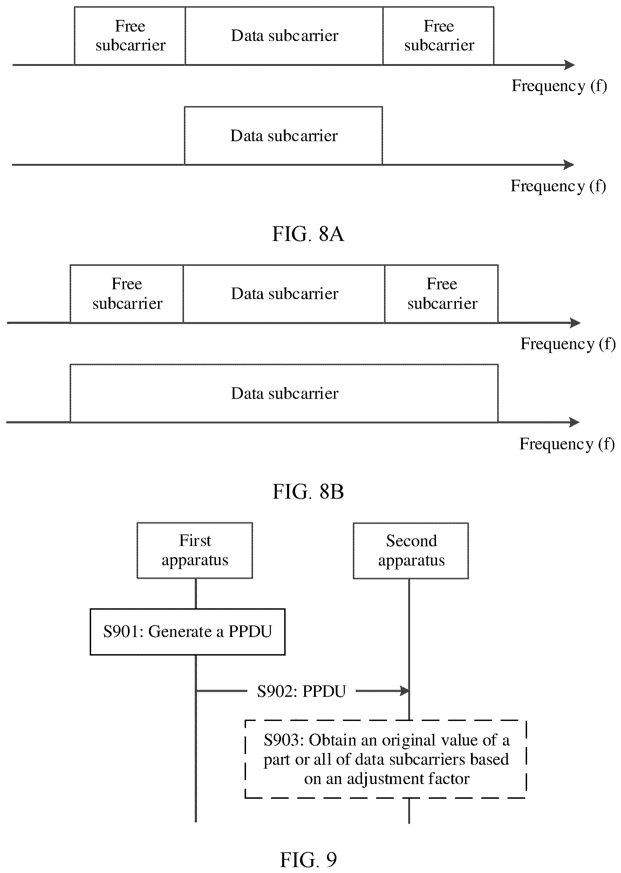

For example, the second subcarrier set includes the guard subcarrier. As shown in FIG. 8A, if the signaling information indicates that the PPDU is transmitted by using the second subcarrier, guard subcarriers on two sides of the data subcarrier may be second subcarriers, and the PPDU may be transmitted by using the data subcarrier, that is, transmitted by using the first subcarrier. If the signaling information indicates that the PPDU is transmitted without using the second subcarrier, the PPDU may be transmitted by using the data subcarrier, that is, transmitted by using the first subcarrier.

In this manner, the second apparatus may determine the position of the second subcarrier set based on signaling information sent by the first apparatus or based on a pre-agreed position of the second subcarrier set. If the second apparatus indicates, to the first apparatus based on the signaling information, that a second PPDU is transmitted without using the second subcarrier, the second apparatus may determine that the PPDU is transmitted currently without using the second subcarrier set.

For example, the second subcarrier set includes a data subcarrier. As shown in FIG. 8B, if the signaling information indicates that the PPDU is transmitted by using the second subcarrier, data subcarriers at fixed positions may be used as the second subcarrier set, and the PPDU may be transmitted by using a remaining data subcarrier, namely, the first subcarrier. If the signaling information indicates that the PPDU is transmitted without using the second subcarrier, the PPDU may be transmitted by using all data subcarriers.

In a possible implementation, the free subcarrier may be used to reduce a PAPR. A free subcarrier value corresponding to a low PAPR needs to be obtained in a manner such as random search or calculation. This process requires some extra time. In comparison with a manner in which there is no free subcarrier, in the manner in which the free subcarrier is carried, it may be difficult for the second apparatus to determine a proper free subcarrier value within limited time when a capability of the second apparatus is poor. To resolve this problem, in this embodiment of this application, additional time may be further provided for the second apparatus to generate an appropriate free subcarrier.

In an example, the PPDU may include a plurality of OFDM symbols. There may be a guard interval between a plurality of OFDM symbols, and selection of a value of the guard interval is related to the second subcarrier set. For example, when the PAPR is reduced through the second subcarrier set, the second apparatus may use a guard interval with a large value, to increase processing time of each OFDM symbol. In this way, the second apparatus has sufficient time to determine an appropriate value of the free subcarrier.

Optionally, the guard interval may include one or more of a cyclic prefix, a cyclic suffix, and a fixed sequence. For example, the guard interval may include only a cyclic prefix, or may include a cyclic suffix, or may include a fixed sequence of any waveform. For another example, the guard interval may include a cyclic prefix and a cyclic suffix, or may include a fixed sequence of any waveform and a cyclic prefix, or may include a fixed sequence of any waveform and a cyclic suffix. For another example, the guard interval may include a cyclic prefix+a cyclic suffix+a fixed sequence of any waveform.

In another example, in this embodiment of this application, a preset padding bit may be added to at least one field before a data field included in the PPDU. A length of the preset padding bit is related to the second subcarrier set. For example, when the PAPR is reduced through the second subcarrier set, the second apparatus may add a long padding bit to the at least one field before the data field, to increase processing time of each OFDM symbol. In this way, the second apparatus has sufficient time to determine an appropriate value of the free subcarrier. It may be understood that the preset padding bit may be all 0s, all 1s, or a random bit. This is not specifically limited in this application. The preset padding bit may be predefined in a protocol or preconfigured. This is not specifically limited in this application.

In another possible implementation, in some cases (for example, a trigger frame triggers a user to send uplink data), the first apparatus needs to know a processing capability of the second apparatus for the free subcarrier. In this case, the first apparatus may notify the capability of the first apparatus during capability negotiation. For example, when the second subcarrier is used to reduce the PAPR, processing time may be specified, or even more specifically, when a size of a second subcarrier and/or a size of a bandwidth are/is specified, processing time may be specified.

For example, the second apparatus may send capability information to the first apparatus, where the capability information may indicate processing time when the second subcarrier is used to reduce the PAPR. Optionally, the capability information may specifically indicate a correspondence between a size of the second subcarrier, a bandwidth occupied by the PPDU, and the processing time when the second subcarrier is used to reduce the PAPR.

In this embodiment of this application, the foregoing possible implementations are used to describe an implementation of reducing the PAPR through the second subcarrier set. An embodiment of this application further provides another information transmission method. In the method, a first apparatus may indicate, to a second apparatus, an adjustment factor through a reference subcarrier. The adjustment factor may indicate a coefficient by which a part or all of data subcarriers in data subcarriers are multiplied. It may be understood that the coefficient may be used to reduce a PAPR. Based on this solution, the PAPR may be reduced through the adjustment factor, and the adjustment factor is indicated through the reference subcarrier.

FIG. 9 is an example flowchart of an information transmission method according to an embodiment of this application. The method may include the following operations.

S901: A first apparatus generates a PPDU.

The PPDU may include a data subcarrier. It may be understood that the data subcarrier may be used to carry data. A part or all of data subcarriers in the data subcarriers may be multiplied by a coefficient, or phase conversion may be performed on a part or all of data subcarriers, to reduce a PAPR.

For example, a frequency domain sequence={a1, a2, a3, a4, ..., a236, c1, c2, c3, c4, ..., c20}, some subcarriers {c1, c2, c3, ..., c20} in the frequency domain sequence may still carry data, but the some subcarriers may be multiplied by the coefficient, or per-symbol phase conversion or even amplitude and phase conversion is allowed to be performed on the some subcarriers, to reduce a corresponding PAPR in a symbol. For ease of description, the coefficient by which the part or all of data subcarriers are multiplied or phase conversion values of the part or all of data subcarriers may be referred to as an adjustment factor.

In the solution shown in FIG. 9, the part or all of data subcarriers may multiply the coefficient or perform phase rotation to reduce the PAPR, which is not as flexible as the embodiment shown in FIG. 5. The subcarriers that multiply the coefficient or perform phase rotation may be referred to as semi-free subcarriers. In the embodiment shown in FIG. 9, although the PAPR cannot be flexibly reduced through a free subcarrier as in the embodiment shown in FIG. 6, the part or all of data subcarriers in the embodiment shown in FIG. 9 can still carry data, so that transmission resources can be saved.

S902: The first apparatus sends the PPDU to a second apparatus.

Correspondingly, the second apparatus receives the PPDU from the first apparatus.

In a possible implementation, additional signaling may indicate, to the second apparatus, the adjustment factor, that is, the coefficient by which the part or all of data subcarriers in the data subcarriers are multiplied or the phase conversion values of the part or all of data subcarriers. It may be understood that adjustment factors of all data subcarriers in the part or all of data subcarriers may be the same or may be different.

In another possible implementation, the PPDU in S902 may carry a reference subcarrier, and the reference subcarrier may indicate the adjustment factor. For example, the adjustment factor may be indicated through a phase value or an amplitude value of one or more reference subcarriers.

For example, a phase value "-1" of the reference subcarrier may correspond to an adjustment factor "-1", a phase value "1" of the reference subcarrier may correspond to an adjustment factor "1", and a phase value "j" of the reference subcarrier may correspond to an adjustment factor "j", and a phase value "-j" of the reference subcarrier may correspond to an adjustment factor "-j". The second apparatus may determine, based on first information carried in the reference subcarrier, the adjustment factor corresponding to the part or all of data subcarriers. It may be understood that a correspondence between a phase value or an amplitude value of the reference subcarrier and the adjustment factor may be pre-agreed on, for example, may be predefined in a protocol or preconfigured.

Optionally, the reference subcarrier may be in a unit of an RU or an MRU, or may be a part of agreed subcarriers, for example, a subcarrier at a fixed position at a specific bandwidth granularity. For example, the reference subcarrier may be implemented through one or more of a pilot subcarrier, a data subcarrier, a null subcarrier, or a guard subcarrier.

When the reference subcarrier is implemented through the data subcarrier, the position of the reference subcarrier may be predefined in a protocol or preconfigured. This is not specifically limited in this application. If the data subcarriers are used as reference subcarriers to indicate the adjustment factor, these data subcarriers do not carry data.

It may be understood that positions of the part or all of data subcarriers may be determined based on the reference subcarrier, for example, data subcarriers before the reference subcarrier, or data subcarriers after the reference subcarrier. Alternatively, the positions of the part or all of data subcarriers may be predefined in a protocol or preconfigured. This is not specifically limited in this application.

Optionally, the embodiment shown in FIG. 9 may further include the following operation S903.

S903: The second apparatus obtains an original value of the part or all of data subcarriers based on the adjustment factor.

In S903, the second apparatus may divide the part or all of data subcarriers by a corresponding coefficient or perform phase conversion based on the adjustment factor indicated by the reference subcarrier, to obtain the original values corresponding to the data subcarriers.

For example, the reference subcarrier is implemented through the pilot subcarrier. The pilot subcarrier may indicate phase conversion values of the part or all of data subcarriers. The second apparatus may obtain four types of information through a received quadrature phase shift keying (quadrature phase shift keying, QPSK) satellite point state at the pilot subcarrier. For example, four constellation points may respectively correspond to phase conversion values 1, j, - 1, and -j. From a perspective of the first apparatus, {c1, c2, c3, ..., c20}, j{c1, c2, c3, ..., c20}, - {c1, c2, c3, ..., c20}, and -j{cl, c2, c3, ..., c20} are respectively sent at corresponding frequency domain positions. The second apparatus may also deduce, based on obtained four types of information, that transmitted data is {c1, c2, c3, ..., c20}.

Based on this solution, the second apparatus may determine adjustment factors of a part or all of data subcarriers through the reference subcarrier, to reduce the overall PAPR.

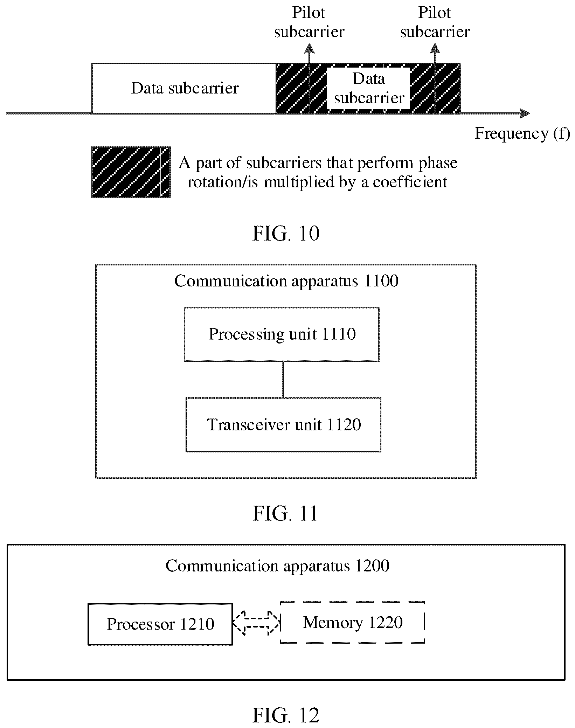

For a modulation scheme of the reference subcarrier indicating the adjustment factor, for robustness, a binary phase shift keying (binary phase shift keying, BPSK) modulation scheme may be selected. Optionally, to indicate more adjustment factors, a higher-order modulation scheme may also be used. In addition, a plurality of reference subcarriers may be further used to jointly indicate an adjustment factor of a corresponding data subcarrier. For example, as shown in FIG. 10, there are two pilot subcarriers, both of which use the BPSK modulation scheme. In this case, the two pilots may also indicate a plurality of states, for example, 2*2=4 states.

FIG. 11 is a block diagram of a communication apparatus 1100 according to an embodiment of this application. The communication apparatus 1100 may correspondingly implement functions or steps implemented by the first apparatus or the second apparatus in the foregoing method embodiments. The communication apparatus may include a processing unit 1110 and a transceiver unit 1120. Optionally, the communication apparatus may further include a storage unit. The storage unit may be configured to store instructions (code or a program) and/or data. The processing unit 1110 and the transceiver unit 1120 may be coupled to the storage unit. For example, the processing unit 1110 may read the instructions (the code or the program) and/or the data in the storage unit, to implement a corresponding method. The foregoing units may be independently disposed, or may be partially or completely integrated.

Optionally, the transceiver unit 1120 may include a sending unit and a receiving unit. The sending unit may be configured to perform all sending operations performed by the communication apparatus 1100, and the receiving unit may be configured to perform all receiving operations performed by the communication apparatus 1100.

In some possible implementations, the communication apparatus 1100 can correspondingly implement behavior and functions of the first apparatus and the like in the foregoing method embodiments. For example, the communication apparatus 1100 may be the first apparatus, or may be a component (for example, a chip or a circuit) used in the first apparatus. The transceiver unit 1120 may be configured to perform all receiving or sending operations performed by the first apparatus in the embodiment shown in FIG. 5 or FIG. 9, for example, S501 and S502 in the embodiment shown in FIG. 5, S902 in the embodiment shown in FIG. 9, and/or configured to support another process of the technology described in this specification. The processing unit 1110 is configured to perform all operations other than the receiving and sending operations performed by the first apparatus in the embodiment shown in FIG. 5 or FIG. 9, for example, S901 in the embodiment shown in FIG. 9, and/or configured to support another process of the technology described in this specification.

For example, the processing unit 1110 is configured to generate a PPDU. The transceiver unit 1120 is configured to send the PPDU to the second apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data sent to the second apparatus on the first subcarrier set and a sequence sent to the second apparatus on the second subcarrier set, and the sequence is used to reduce a PAPR.

For another example, the processing unit 1110 is configured to generate a PPDU. The transceiver unit 1120 is configured to send the PPDU to the second apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR.

In some possible implementations, the communication apparatus 1100 can correspondingly implement behavior and functions of the second apparatus in the foregoing method embodiments. For example, the communication apparatus 1100 may be the second apparatus, or may be a component (for example, a chip or a circuit) used in the second apparatus. The transceiver unit 1120 may be configured to perform all receiving or sending operations performed by the second apparatus in the embodiment shown in FIG. 5 or FIG. 9, for example, S501 and S502 in the embodiment shown in FIG. 5, S902 in the embodiment shown in FIG. 9, and/or configured to support another process of the technology described in this specification. The processing unit 1110 is configured to perform all operations other than the receiving and sending operations performed by the second apparatus in the embodiment shown in FIG. 5, for example, S903 in the embodiment shown in FIG. 9, and/or configured to support another process of the technology described in this specification.

For example, the transceiver unit 1120 is configured to receive a PPDU from the first apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The processing unit 1110 is configured to determine the first subcarrier set and the second subcarrier set based on the resource unit allocation information. The PPDU includes first data sent to the second apparatus on the first subcarrier set and a sequence sent to the second apparatus on the second subcarrier set, and the sequence is used to reduce a PAPR.

For another example, the transceiver unit 1120 is configured to receive a PPDU from the first apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR. The processing unit 1110 is configured to divide the part or all of data subcarriers by the coefficient, to obtain an original value of the part or all of data subcarriers.

For operations performed by the processing unit 1110 and the transceiver unit 1120, refer to the related descriptions in the foregoing method embodiments.

It should be understood that the processing unit 1110 in this embodiment of this application may be implemented by a processor or a processor-related circuit component, and the transceiver unit 1120 may be implemented by a transceiver, a transceiver-related circuit component, or a communication interface.

Based on a same concept, as shown in FIG. 12, an embodiment of this application provides a communication apparatus 1200. The communication apparatus 1200 includes a processor 1210. Optionally, the communication apparatus 1200 may further include a memory 1220, configured to: store instructions executed by the processor 1210, store input data needed by the processor 1210 to run instructions, or store data generated after the processor 1210 runs instructions. The processor 1210 may implement the method shown in the foregoing method embodiments based on the instructions stored in the memory 1220.

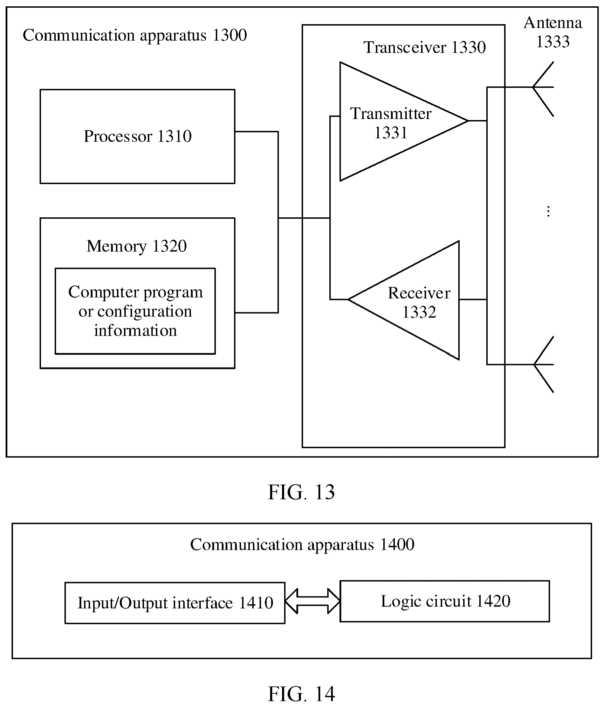

Based on a same concept, as shown in FIG. 13, an embodiment of this application provides a communication apparatus 1300. The communication apparatus 1300 may be a chip or a chip system. Optionally, in this embodiment of this application, the chip system may include a chip, or may include a chip and another discrete device.

The communication apparatus 1300 may include at least one processor 1310. The processor 1310 is coupled to a memory. Optionally, the memory may be located inside the apparatus, or may be located outside the apparatus. For example, the communication apparatus 1300 may further include at least one memory 1320. The memory 1320 stores a computer program, configuration information, a computer program or instructions, and/or data necessary for implementing any one of the foregoing embodiments. The processor 1310 may execute the computer program stored in the memory 1320, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320. A specific connection medium between a transceiver 1330, the processor 1310, and the memory 1320 is not limited in embodiments of this application.

The communication apparatus 1300 may further include the transceiver 1330, and the communication apparatus 1300 may exchange information with another device via the transceiver 1330. The transceiver 1330 may be a circuit, a bus, a transceiver, or any other apparatus that may be configured to exchange information, or is referred to as a signal transceiver unit. As shown in FIG. 13, the transceiver 1330 includes a transmitter 1331, a receiver 1332, and an antenna 1333. In addition, when the communication apparatus 1300 is a chip-type apparatus or a circuit, the transceiver in the communication apparatus 1300 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1300 may be used in a first apparatus. Specifically, the communication apparatus 1300 may be the first apparatus, or may be an apparatus that can support the first apparatus and implement a function of the first apparatus in any one of the foregoing embodiments. The memory 1320 stores a necessary computer program, a computer program or instructions, and/or data for implementing a function of the management device in any one of the foregoing embodiments, for example, the first apparatus. The processor 1310 may execute the computer program stored in the memory 1320, to complete the method performed by the first apparatus in any one of the foregoing embodiments.

In a possible implementation, the communication apparatus 1300 may be used in a second apparatus. Specifically, the communication apparatus 1300 may be the second apparatus, or may be an apparatus that can support the second apparatus and implement a function of the second apparatus in any one of the foregoing embodiments. The memory 1320 stores a computer program, a computer program or instructions, and/or data necessary for implementing a function of the second apparatus in any one of the foregoing embodiments. The processor 1310 may execute the computer program stored in the memory 1320, to complete the method performed by the second apparatus in any one of the foregoing embodiments.

The communication apparatus 1300 provided in this embodiment may be used in the first apparatus to complete the method performed by the first apparatus, or may be used in the second apparatus to complete the method performed by the second apparatus. Therefore, for technical effect that can be achieved by the communication apparatus, refer to the foregoing method embodiments. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 14. Based on the foregoing embodiments, an embodiment of this application further provides another communication apparatus 1400, including an input/output interface 1410 and a logic circuit 1420. The input/output interface 1410 is configured to receive code instructions and transmit the code instructions to the logic circuit 1420. The logic circuit 1420 is configured to run the code instructions to perform the method performed by the first apparatus or the second apparatus in any one of the foregoing embodiments.

Optionally, the input/output interface 1410 may be an interface on a chip, and the logic circuit 1420 may be one or more processors. Optionally, the one or more processors may be located inside the apparatus, or may be located outside the apparatus.

The following describes in detail operations performed when the communication apparatus is used in the first apparatus or the second apparatus.

In another optional implementation, the communication apparatus 1400 may be used in the first apparatus, to perform the method performed by the first apparatus, specifically, for example, the method performed by the first apparatus in the embodiment shown in FIG. 5 or FIG. 9.

For example, the logic circuit 1420 is configured to generate a PPDU. The input/output interface 1410 is configured to output a PPDU to the second apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The PPDU includes first data sent to the second apparatus on the first subcarrier set and a sequence sent to the second apparatus on the second subcarrier set, and the sequence is used to reduce a PAPR.

For another example, the logic circuit 1420 is configured to generate a PPDU. The input/output interface 1410 is configured to output a PPDU to the second apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR.

The communication apparatus 1400 provided in this embodiment may be used in the first apparatus, to complete the method performed by the first apparatus. Therefore, for technical effect that can be achieved by the communication apparatus, refer to the foregoing method embodiments. Details are not described herein again.

In an optional implementation, the communication apparatus 1400 may be used in the second apparatus, to perform the method performed by the second apparatus, specifically, for example, the method performed by the second apparatus in the embodiment shown in FIG. 5 or FIG. 9.

For example, the input/output interface 1410 is configured to input a PPDU from the first apparatus. The PPDU includes resource unit allocation information, and the resource unit allocation information indicates one or more resource units. The resource unit allocation information further indicates that the one or more resource units include a first subcarrier set and a second subcarrier set, and the first subcarrier set and the second subcarrier set do not overlap. The logic circuit 1420 is configured to determine the first subcarrier set and the second subcarrier set based on the resource unit allocation information. The PPDU includes first data sent to the second apparatus on the first subcarrier set and a sequence sent to the second apparatus on the second subcarrier set, and the sequence is used to reduce a PAPR.

For another example, the input/output interface 1410 is configured to input a PPDU from the first apparatus, where the PPDU includes a data subcarrier and a reference subcarrier. The reference subcarrier indicates an adjustment factor, the adjustment factor indicates a coefficient by which a part or all of data subcarriers in the data subcarriers are multiplied, and the coefficient is used to reduce a PAPR. The logic circuit 1420 is configured to divide the part or all of data subcarriers by the coefficient, to obtain an original value of the part or all of data subcarriers.

The communication apparatus 1400 provided in this embodiment may be used in the second apparatus, to complete the method performed by the second apparatus. Therefore, for technical effect that can be achieved by the communication apparatus, refer to the foregoing method embodiments. Details are not described herein again.

Based on the foregoing embodiments, an embodiment of this application further provides a communication system. The communication system includes at least one communication apparatus used in a first apparatus and at least one communication apparatus used in a second apparatus. For technical effect that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first apparatus or the method performed by the second apparatus in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 11 to FIG. 14, an embodiment of this application further provides a chip, including a processor, configured to support the communication apparatus in implementing the functions of the first apparatus or the second apparatus in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, and an optical storage) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. An information transmission method, comprising:
sending, by a first apparatus, a physical protocol data unit PPDU to a second apparatus, wherein the PPDU comprises resource unit allocation information, the resource unit allocation information indicates one or more resource units, the resource unit allocation information further indicates that the one or more resource units comprise a first subcarrier set and a second subcarrier set, and the first subcarrier set and the second subcarrier set do not overlap, wherein
the PPDU comprises first data sent on the first subcarrier set and a sequence sent on the second subcarrier set, and the sequence is used to reduce a peak to average power ratio PAPR.

2. The method according to claim 1, wherein the resource unit allocation information comprises one or more user fields, and the one or more user fields comprise a user field indicating the second subcarrier set, and an identifier of the user field indicating the second subcarrier set is a special value; or
the resource unit allocation information indicates that a part or all of the one or more resource units comprise only the second subcarrier set.

3. The method according to claim 1, wherein the resource unit allocation information is carried in a punctured channel information field (punctured channel information field) of the PPDU.

4. The method according to any one of claims 1 to 3, wherein the second subcarrier set comprises one or more of a null subcarrier, a guard subcarrier, and a pilot subcarrier.

5. The method according to any one of claims 1 to 4, wherein the PPDU comprises a plurality of orthogonal frequency division multiplexing OFDM symbols, and selection of a value of a guard interval between the plurality of OFDM symbols is related to the second subcarrier set.

6. The method according to claim 5, wherein the guard interval comprises one or more of a cyclic prefix, a cyclic suffix, and a fixed sequence.

7. An information transmission method, comprising:
sending, by a first apparatus, a physical protocol data unit PPDU to a second apparatus, wherein the PPDU comprises a data subcarrier and a reference subcarrier, wherein
the reference subcarrier indicates an adjustment factor, the adjustment factor indicates a coefficient by which a part or all of data subcarriers in the data subcarriers are multiplied, and the coefficient is used to reduce a PAPR.

8. The method according to claim 7, wherein the reference subcarrier comprises one or more of a pilot subcarrier, a data subcarrier, a null subcarrier, and a guard subcarrier.

9. An information transmission method, comprising:
receiving, by a second apparatus, a physical protocol data unit PPDU from a first apparatus, wherein the PPDU comprises resource unit allocation information, the resource unit allocation information indicates one or more resource units, the resource unit allocation information further indicates that the one or more resource units comprise a first subcarrier set and a second subcarrier set, and the first subcarrier set and the second subcarrier set do not overlap, wherein
the PPDU comprises first data on the first subcarrier set and a sequence on the second subcarrier set, and the sequence is used to reduce a PAPR.

10. The method according to claim 9, wherein the resource unit allocation information comprises one or more user fields, and a user field whose identifier is a special value in the one or more user fields indicates the second subcarrier set; or
the resource unit allocation information indicates that a part or all of the one or more resource units comprise only the second subcarrier set.

11. The method according to claim 9, wherein the resource unit allocation information is carried in a punctured channel information field.

12. The method according to any one of claims 9 to 11, wherein the second subcarrier set comprises one or more of a null subcarrier, a guard subcarrier, and a pilot subcarrier.

13. The method according to any one of claims 9 to 12, wherein the PPDU comprises a plurality of orthogonal frequency division multiplexing OFDM symbols, and selection of a value of a guard interval between the plurality of OFDM symbols is related to the second subcarrier set.

14. The method according to claim 13, wherein the guard interval comprises one or more of a cyclic prefix, a cyclic suffix, and a fixed sequence.

15. An information transmission method, comprising:
receiving, by a second apparatus, a physical protocol data unit PPDU from a first apparatus, wherein the PPDU comprises a data subcarrier and a reference subcarrier, wherein
the reference subcarrier indicates an adjustment factor, the adjustment factor indicates a coefficient by which a part or all of data subcarriers in the data subcarriers are multiplied, and the coefficient is used to reduce a PAPR; and
dividing, by the second apparatus, the part or all of data subcarriers by the coefficient, to obtain an original value of the part or all of data subcarriers.

16. The method according to claim 15, wherein the reference subcarrier comprises one or more of a pilot subcarrier, a data subcarrier, a null subcarrier, and a guard subcarrier.

17. A communication apparatus, comprising a unit configured to perform the method according to any one of claims 1 to 6, or comprising a unit configured to perform the method according to claim 7 or 8.

18. A communication apparatus, comprising a unit configured to perform the method according to any one of claims 9 to 14, or comprising a unit configured to perform the method according to claim 15 or 16.

19. A communication apparatus, comprising: a processor and a memory, wherein
the memory is configured to store a computer program or instructions; and
the processor is configured to execute the computer program or instructions in the memory, to enable the apparatus to perform the method according to any one of claims 1 to 6, enable the apparatus to perform the method according to claim 7 or 8, enable the apparatus to perform the method according to any one of claims 9 to 14, or enable the apparatus to perform the method according to claim 15 or 16.

20. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 6, the electronic apparatus is enabled to perform the method according to claim 7 or 8, the electronic apparatus is enabled to perform the method according to any one of claims 9 to 14, or the electronic apparatus is enabled to perform the method according to claim 15 or 16.

21. A computer program product, comprising computer-executable instructions, wherein when the computer-executable instructions are run on a computer, the computer is enabled to perform the method according to any one of claims 1 to 16.

22. A chip system, wherein the chip system comprises:
a communication interface; and
a processor, configured to invoke and run instructions through the communication interface, to enable a device on which the chip system is installed to perform the method according to any one of claims 1 to 6, enable a device on which the chip system is installed to perform the method according to claim 7 or 8, enable a device on which the chip system is installed to perform the method according to any one of claims 9 to 14, or enable a device on which the chip system is installed to perform the method according to claim 15 or 16.
